(19) Europäisches Patentamt / European Patent Office / Office européen des brevets

(11) **EP 4 343 638 B1**

(12) **EUROPEAN PATENT SPECIFICATION**

(45) Date of publication and mention
of the grant of the patent:
**01.10.2025 Bulletin 2025/40**

(51) International Patent Classification (IPC):
**G06N 3/063** (2023.01)   **G06N 3/044** (2023.01)
**G06N 3/047** (2023.01)   **G06N 5/01** (2023.01)

(21) Application number: **23197379.3**

(52) Cooperative Patent Classification (CPC):
**G06N 3/044; G06N 3/047; G06N 3/063; G06N 5/01**

(22) Date of filing: **14.09.2023**

(54) **SEQUENTIAL GROUP PROCESSING OF OPTIMIZATION PROBLEMS**

SEQUENZIELLE GRUPPENVERARBEITUNG VON OPTIMIERUNGSPROBLEMEN

TRAITEMENT SÉQUENTIEL DE GROUPES DE PROBLÈMES D'OPTIMISATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.09.2022 US 202217952296**

(43) Date of publication of application:
**27.03.2024 Bulletin 2024/13**

(73) Proprietor: **Fujitsu Limited
Kawasaki-shi, Kanagawa 211-8588 (JP)**

(72) Inventors:
• **Dabiri, Keivan
Toronto, Ontario M5G1L5 (CA)**
• **Sheikholeslami, Ali
Toronto, Ontario M5G1L5 (CA)**
• **Tamura, Hirotaka
Sunnyvale, California 94085 (US)**

(74) Representative: **Hoffmann Eitle
Patent- und Rechtsanwälte PartmbB
Arabellastraße 30
81925 München (DE)**

(56) References cited:
**US-A1- 2020 326 673    US-A1- 2021 256 090**

## Description

The present disclosure generally relates to sequential group processing of optimization problems, and in particular to a method, a system, and non-transitory computer-readable storage media.

## BACKGROUND

An optimization problem may be solved by finding an input value that returns a maximum value or a minimum value for a function that represents the optimization problem. Some optimization problems may include multiple inputs that each include multiple possible input values such that determining a maximum value or a minimum value that solves for the optimization problems may include adjusting one or more of the multiple inputs. Computer systems may be used to more effectively and efficiently identify solutions to the optimization problems.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

US 2021/0256090 A1 describes an optimization apparatus that includes: Ising machines that each search for a solution of a subproblem among subproblems obtained by dividing a problem represented by an Ising model, each of the Ising machines including: a memory configured to store values of a state variable set corresponding to a subproblem to be calculated for a plurality of groups; a processor configured to: perform processing of calculating a second solution candidate for each of the plurality of groups based on first solution candidates of subproblems calculated by other Ising machines by changing a group to be processed for every unit period such that the second solution candidate is calculated for the state variable set of a group different from groups processed by the other Ising machines in a same unit period; and a communication circuit configured to transmit the second solution candidate to the other Ising machines every time the unit period ends.

US 2020/0326673 A1 describes an information processing device that includes: a memory; and a processor coupled to the memory and configured to calculate, for a plurality of bits corresponding to a plurality of spins included in an Ising model obtained by converting a problem to be calculated, in a case where the plurality of bits is divided into a plurality of groups, on the basis of a first local field value for a first bit having a value of 1 and a second local field value for a second bit having a value of 0 among a plurality of bits included in each of the plurality of groups, a first energy change of the Ising model due to a change of the value of the first bit from 1 to 0 and a change of the value of the second bit from 0 to 1.

## SUMMARY

According to an aspect, there is provided a method as set out in Claim 1. According to another aspect, there is provided a system as set out in Claim 7.

According to another aspect, there is provided one or more non-transitory computer-readable storage media as set out in Claim 13..

The object and advantages of the embodiments will be realized and achieved at least by the elements, features, and combinations particularly pointed out in the claims. It is to be understood that both the foregoing general description and the following detailed description are explanatory and are not restrictive of the invention, as claimed.

BRIEF DESCRIPTION OF THE DRAWINGS

Example embodiments will be described and explained with additional specificity and detail through the accompanying drawings in which:

Figure 1 is a diagram of an example embodiment of a multi-core computer processor architecture configured to perform one or more operations relating to solving optimization problems according to at least one embodiment of the present disclosure.

Figure 2 is a diagram of an example embodiment of a multi-core computer processor architecture configured to perform a trial step and an update step for solving optimization problems according to at least one embodiment of the present disclosure.

Figure 3 is a diagram of an example embodiment of mapping neurons associated with an optimization problem to one or more computing cores according to at least one embodiment of the present disclosure.

Figure 4 is a diagram of an example embodiment of selection and trialing of one or more neurons in a trial kernel according to at least one embodiment of the present disclosure.

Figure 5 is a diagram illustrating communication between the trial kernel and an update kernel of the multi-core computer processor architecture according to at least one embodiment of the present disclosure.

Figure 6A illustrates an example embodiment of a weight matrix according to at least one embodiment of the present disclosure.

Figure 6B illustrates transposition of the weight matrix according to at least one embodiment of the present disclosure.

Figure 7 illustrates an example embodiment of a hybrid weight access process according to at least one embodiment of the present disclosure.

Figure 8 is a flowchart of an example method of performing operations relating to an optimization problem using a multi-core computer processor architecture according to at least one embodiment of the present disclosure.

Figure 9 is an example computing system.

## DETAILED DESCRIPTION

There is described herein a method that includes obtaining variables that represent characteristics related to an optimization problem and weights that correspond to the variables. The variables are divided into groups that each include a sub-set of the variables. The method includes obtaining a group local field matrix for each group of variables. Each local field matrix includes local field values that indicate interactions between a respective variable and the other variables as influenced by their respective weights. The method includes performing a semi-sequential trial process, which is a stochastic process that includes performing trials with respect to the variables in which each trial determines whether to change a state of a variable. The semi-sequential trial process includes updating all of the group local field matrices based on the stochastic process results, and a solution to the optimization problem is determined based on the results.

Solving an optimization problem may prove challenging because a wide variety of input variables may be adjusted to determine a solution to the optimization problem. Additionally or alternatively, it may be difficult to conclude whether a determined solution to the optimization problem represents the best, or even a highly optimized, solution. For example, a particular optimization problem may seek to maximize a parameter associated with the particular optimization problem, but it may be difficult to confirm whether a particular solution results in the greatest possible value of the parameter or a value of the parameter is within some threshold range of the greatest possible value.

Computer systems may be used to assist with solving the optimization problem. However, various computing methods encounter similar issues with identifying whether a solution provided by a computer system is an optimized solution to the optimization problem. For example, a particular computing method may determine a particular solution to a particular optimization problem. However, confirming whether the particular solution is the optimal solution may be difficult because the particular computing method may have determined a solution that represents a local extrema of the particular optimization problem. Additionally or alternatively, performing computations relating to optimization problems may involve significant computer resource usage because determining an optimized solution to the optimization problems may be an iterative process involving numerous operations and computations.

Because of the complexity and multivariate nature of optimization problems, approximation methods may be used to reduce computer resource usage while still providing solutions to the optimization problems. For example, a quadratic unconstrained binary optimization (QUBO) model may be used to represent a particular optimization problem as a series of nodes with binary input values (e.g., 0 or 1). However, current methods of solving QUBO problems and other binary optimization problems may only accommodate a small number of input variables and/or may involve a large amount of processing time and computing resources to solve the binary optimization problem as the number of variables increases.

The present disclosure relates to, operations that allow for the scaling up of optimization problems while reducing the amount of computing resources that may be used as compared to traditional approaches. Variables corresponding to an optimization problem are divided into multiple groups and computational trials are performed on each of the variables included in a particular group in parallel. Local field values associated with every group of variables are updated after performing the parallel computational trials corresponding to the particular group of variables, and computational trials involving different groups of variables may be performed sequentially after updating the local field values associated with every group of variables based on the parallel computational trials performed with respect to the particular group of variables. A multi-core computer processor architecture is configured to perform one or more of the operations and computations relating to solving optimization problems using the sequential group processing indicated above and discussed in detail below. One or more embodiments of the multi-core computer processor architecture described in the present disclosure may improve the functionality of a computer system by arranging computational processes, data storage, and/or data retrieval in a way such that operations of the computer system are performed more efficiently, such as with respect to solving optimization problems (e.g., QUBO problems).

Embodiments of the present disclosure are explained with reference to the accompanying figures.

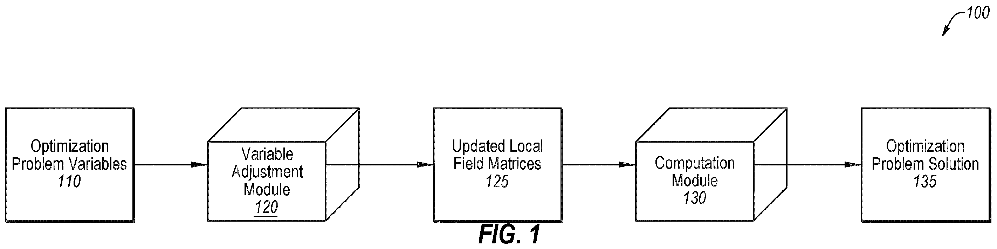

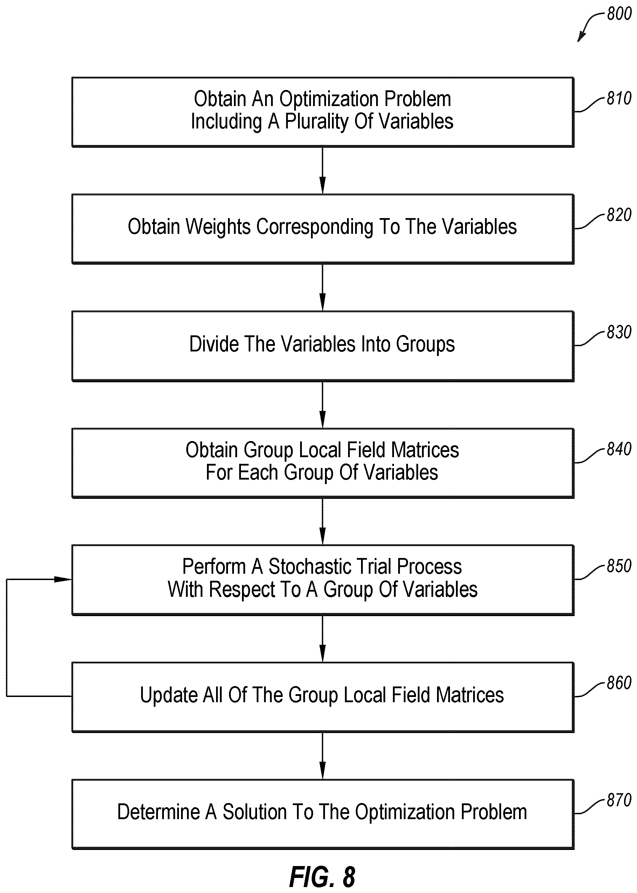

Figure 1 is a diagram of an example embodiment of a system 100 configured to perform one or more operations relating to solving optimization problems, according to at least one embodiment of the present disclosure. In some embodiments, the system 100 may include a variable-adjustment module 120 and/or a computation module 130. Elements of the system 100, including, for example, the variable-adjustment module 120 and/or the computation module 130 (generally referred to as "computing modules"), may include code and routines configured to enable a computing system to perform one or more operations. Additionally or alternatively, the computing modules may be implemented using hardware including a processor, a microprocessor (e.g., to perform or control performance of one or more operations), a field-programmable gate array (FPGA), or an application-specific integrated circuit (ASIC). In some other instances, the computing modules may be implemented using a combination of hardware and software. In the present disclosure, operations described as being performed by the computing modules may include operations that the computing modules may direct one or more corresponding systems to perform. The computing modules may be configured to perform a series of operations with respect to optimization problem variables 110, updated local field matrices 125, and/or an optimization problem solution 135 as described in further detail below in relation to method 800 of Figure 8.

The variable-adjustment module 120 may obtain the optimization problem variables 110 and output an updated local field matrix 125 in which each element of the local field matrix 125 corresponds to a particular optimization problem variable 110. In some embodiments, the optimization problem variables 110 may describe an aspect or a detail relating to a corresponding optimization problem. Each of the optimization problem variables 110 may be binary variables that include two states in which a particular state of a particular optimization problem variable contributes to a particular output related to the optimization problem. Reconfiguring the states of the optimization problem variables may result in changing the output of the optimization problem to one of $2^N$ values in which $N$ is the number of optimization problem variables because there may be $2^N$ possible combinations of optimization problem variable states given N binary variables. For example, the binary state configuration of a particular optimization problem variable may relate to a first or a second action (e.g., making a left turn versus a right turn), a first or a second state of operation (e.g., an "on" state versus an "off" state), or a first or a second choice (e.g., adjusting a parameter by a first increment versus by a second increment), and an output of a particular optimization problem with which the particular optimization problem variable is associated may be a combination of the binary state configurations of several such first actions or second actions, first states of operation or second states of operation, or first choices or second choices.

Additionally or alternatively, each of the optimization problem variables 110 may include multiple states that include more than setting the optimization problem variables 110 at one of two states. For example, a particular optimization problem variable may include three, four, five, six, or a greater number of states that represent possible actions, states of operations, or choices that may be made with respect to the particular optimization problem variable. In this and other examples, the particular optimization problem variable may be represented as a multitude of binary states, and the optimization problem with which the particular optimization problem variable is associated may be modeled as a quadratic unconstrained binary optimization (QUBO) problem made of numerous binary states in which groupings of binary states represent particular non-binary variables.

Each of the optimization problem variables 110 obtained by the variable-adjustment module 120 may include a default state. In some embodiments, the default state of the optimization problem variables 110 may represent initial states of the optimization problem variables 110. In the context of binary states, for example, the default state of each optimization problem variable 110 may be a first state (e.g., an "off" state, making no adjustment to a parameter value, etc.). Additionally or alternatively, the default states of the optimization problem variables 110 may represent previously determined states, such as state configurations of the optimization problem variables 110 provided by a user or previous iterative adjustments to the state.

The variable-adjustment module 120 may change the states associated with each of the optimization problem variables 110 to generate updated variable states. In some embodiments, changing the state of the optimization problem variables 110 may be a stochastic process in which one or more of the states are randomly adjusted. The stochastic process of changing the states of the optimization problem variables 110 may include a trial step and an update step.

During the trial step, one or more of the optimization problem variables 110 may be randomly selected and the states corresponding to the selected optimization problem variables 110 may be changed. Changing the states of the optimization problem variables 110 may include switching from a first state to a second state for binary variables. Additionally or alternatively, the states of non-binary variables may be randomly adjusted or changed according to pre-specified rules. For example, a non-binary variable including three possible states may include a trial rule of changing a first state to a second state, the second state to a third state, and the third state to the first state.

During the update step, the variable-adjustment module 120 may update an output value associated with the optimization problem to which the optimization problem variables 110 are related based on the changed states of the optimization problem variables 110. In some embodiments, the output value of the optimization problem may be represented by a local field matrix in which each of the optimization problem variables 110 is assigned as an element in the local field matrix. The local field matrix may be used to indicate an amount of change in the energy of the system 100 when the state of a particular variable of the system 100 is changed. Changes to states of any of the optimization problem variables 110 during the trial step may not only cause changes in the local fields of the trialed optimization problem variables, but also the local fields of non-trialed optimization problem variables. Consequently, the energy of the system, represented by the elements of the local field matrix, may be recalculated during the update step based on changes to only a subset of the variables.

In some embodiments, the stochastic process during the trial step may be performed based on a temperature of a system that represents the optimization problem. At high temperatures, a greater number of trials may be performed during the stochastic process such that a greater number of optimization problem variables 110 are trialed, while the number of trials performed decreases as the temperature of the system decreases. The optimization problem variables 110 may be assigned an initial temperature, and after performing a number of trials corresponding to the first temperature during the trial step, the local field matrix may be updated during the update step. The temperature of the system may then be decreased after updating the local field matrix. In these and other embodiments, the trial step and the update step may be performed recursively for a set number of iterations or until a threshold temperature is reached.

As optimization problems become more complex, a greater number of optimization problem variables 110 may be obtained by the variable-adjustment module 120, and a heavier computational load may be needed to perform the trial and update steps. In some embodiments, the optimization problem variables 110 may be divided into multiple groups of variables to reduce the computational load of stochastically trialing the optimization problem variables 110 and updating the local field matrix.

In these and other embodiments, a number of groups into which the optimization problem variables 110 is divided may be determined based on a number of computing cores included in a computer system configured to perform operations associated with the trial and update steps of the variable-adjustment module 120. For example, optimization problem variables associated with a particular optimization problem may be trialed and updated using a particular computer system that includes five computing cores, and the optimization problem variables may accordingly be divided into five groups with each group of optimization problem variables being processed on a different computing core. Additionally or alternatively, a processing capability of each of the computing cores may be considered for dividing the optimization problem variables into their respective groups. Returning to the previous example, the first computing core may include greater processing capabilities than the second, third, fourth, or fifth computing cores; as such, a greater number of optimization problem variables may be assigned to the group corresponding to the first computing core relative to the other computing cores. Additionally or alternatively, a number of groups may be determined based on the total number of variables and the computing capabilities of each of the computing cores. As another example, a particular optimization problem may include a total of 100,000 variables and each computing core may be capable of processing 8,000 variables in parallel. In this and other examples, a minimum of thirteen computing cores may be needed to process the particular optimization problem. As such, in such instances, the number of groups may be thirteen or more.

The local fields of variables included in the same group are organized as a group local field matrix. Because reconfiguring the state of a particular variable included in a particular group may cause the local fields of other variables to change, accepted state configurations during the trial step may affect the entire group local field matrix with which the particular variable is associated and/or the group local field matrices of other groups of variables. In these and other embodiments, the update step performed by the variable-adjustment module 120 may include updating all of the group local field matrices in response to an accepted state configuration changes of a particular optimization problem variable included in a particular group of variables.

The updated local field matrices 125, which may include the corresponding variable states that contributed to the values of the updated local field matrices 125, may be obtained by the computation module 130. In some embodiments, the computation module 130 may determine an output of the optimization problem to which the optimization problem variables 110 correspond based on the variable states, and the output of the optimization problem may represent an optimization problem solution 135. As operations of the variable-adjustment module 120 adjust the states of the optimization problem variables 110, the optimization problem solution 135 may be adjusted to trend towards a target output of the optimization problem (e.g., minimizing a particular result, maximizing the particular result, or trending towards a particular value of the optimization problem).

Modifications, additions, or omissions may be made to the system 100 without departing from the scope of the present disclosure. For example, the designations of different elements in the manner described is meant to help explain concepts described herein and is not limiting. For instance, in some embodiments, the variable-adjustment module 120 and the computation module 130 are delineated in the specific manner described to help with explaining concepts described herein but such delineation is not meant to be limiting. Further, the system 100 may include any number of other elements or may be implemented within other systems or contexts than those described.

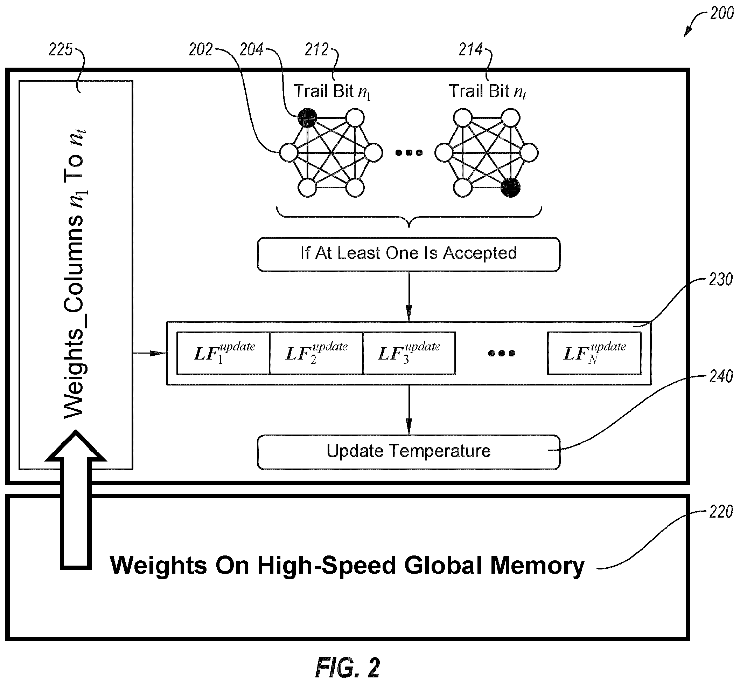

Figure 2 is a diagram of an example embodiment of a multi-core computer processor architecture 200 configured to perform the trial step and the update step for solving optimization problems according to at least one embodiment of the present disclosure. The multi-core computer processor architecture 200 may be an example computer architecture that implements the system 100 of Figure 1. For example, the multi-core computer processor architecture 200 may be an example of the variable-adjustment module 120 of the system 100. In some embodiments, the multi-core computer processor architecture 200 may be configured to perform operations with respect to a first group of variables 212 up to an Nth group of variables 214. Each group of variables may include multiple variables represented by bits 202. One or more bits in each group may be selected as a trial bit 204, and a state corresponding to the trial bit 204 may be changed during the trial step. If at least one state configuration corresponding to the trial bits 204 is accepted, group local field matrices 230 corresponding to the groups of variables may be updated based on the reconfigured states and weights 225 corresponding to each individual variable. For example, reconfiguring states for one or more bits 202 included in the first group of variables 212 may result in a corresponding change to a first group local field matrix, while reconfiguring states for bits 202 included in the Nth group of variables 214 may result in a corresponding change to an Nth group local field matrix. Additionally or alternatively, a temperature 240 associated with the groups of variables may be updated.

In some embodiments, operations relating to the multi-core computer processor architecture 200 may be performed in a local memory, such as a memory storage of a first graphics processing unit (GPU). Each computing core of a multi-core computer processor may be configured to perform the trial step and/or the update step for variables included in one or more of the groups. For example, operations involving the first group of variables 212 may be assigned to a first computing core of a particular multi-core computer processor, and operations involving a second group of variables may be assigned to a second computing core of the same particular multi-core computer processor. In this and other examples, a number of groups into which the variables are divided may correspond to the number of computing cores included in the particular multi-core computer processor such that operations involving the Nth group of variables 214 is assigned to an Mth computing core. As such, a particular computing core may be configured to change the states of the trial bits 204 included in the group of variables corresponding to the particular computing core, compute one or more group local field matrices, and update the temperature 240 after all of the group local field matrices 230 have been updated.

In these and other embodiments, the weights 225 may be stored on a high-speed global memory 220, such as a memory storage of a second GPU. A particular computing core may access the weight 225 corresponding to a particular variable involved with the particular computing core (e.g., the particular variable is included in a group assigned to the particular computing core) responsive to determining that the state of the particular variable is changed during the trial step. The high-speed global memory 220 may be configured to selectively retrieve one or more weights 225 and send the retrieved weights 225 to the local memory on which operations of the multi-core computer processor occur in response to receiving a request for the corresponding weights 225 from one or more of the computing cores.

Modifications, additions, or omissions may be made to the multi-core computer processor architecture 200 without departing from the scope of the present disclosure. For example, the designations of different elements in the manner described is meant to help explain concepts described herein and is not limiting. Further, the multi-core computer processor architecture 200 may include any number of other elements or may be implemented within other systems or contexts than those described.

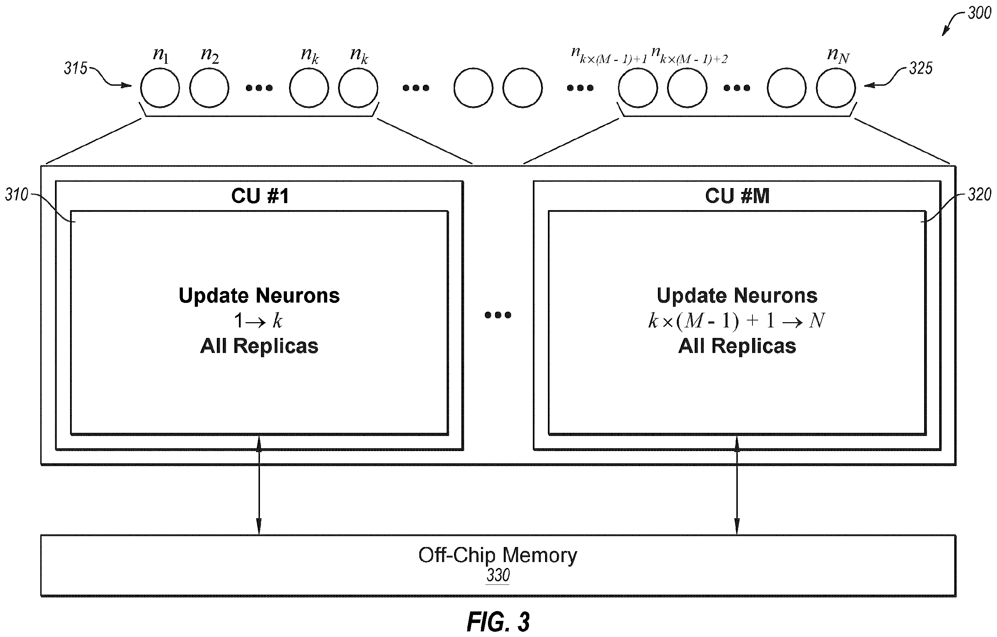

Figure 3 is a diagram of an example embodiment of a computer architecture 300 configured to perform operations relating to dividing variables 305 associated with an optimization problem to one or more computing cores according to at least one embodiment of the present disclosure. The computer architecture 300 may be in addition to or as a substitute to all or part of the multi-core computer processor architecture 200 described in relation to Figure 2. In some embodiments, each of the variables 305 may be labeled (e.g., numerically) and organized sequentially. The variables 305 may be randomly allocated labels such that variables 305 that are near one another once organized sequentially may have little to no relation to one another in terms of how the neighboring variables 305 affect an optimization problem with which they are involved. Additionally or alternatively, the variables 305 may be allocated labels such that neighboring variables affect the optimization problem in the same or similar ways. Additionally or alternatively, the variables 305 that affect the optimization problem in the same or similar ways may be allocated disparate labels so that such variables are divided into different groups.

As illustrated in Figure 3, each group of variables may be assigned to a particular computing core to perform the trial and/or update step. For example, a first computing core 310 may be configured to perform operations relating to a first group of variables 315 that includes variables labeled one through some integer, k, and a Mth computing core 320 may be configured to perform operations relating to an Nth group of variables 325 that includes variables labeled as $k \times (M-1) + 1$ through a last Nth variable. Each of the computing cores, including the first computing core 310 and the $M$th computing core 320, may be the same or similar to the computing cores described in relation to the multi-core computer processor architecture 200 of Figure 2. As such, each of the computing cores may be configured to perform a stochastic trial process to change the states of one or more of the variables 305 and update group local field matrices associated with each group of variables. In some embodiments, each of the computing cores may be configured to update the group local field matrices based on weights corresponding to each variable 305, which may be stored on an off-chip memory 330. Each of the computing cores may be configured to access the off-chip memory 330 and retrieve the weights corresponding to any variables 305 involved in the operations of the computing cores.

Modifications, additions, or omissions may be made to the computer architecture 300 without departing from the scope of the present disclosure. For example, the designations of different elements in the manner described is meant to help explain concepts described herein and is not limiting. Further, the computer architecture 300 may include any number of other elements or may be implemented within other systems or contexts than those described.

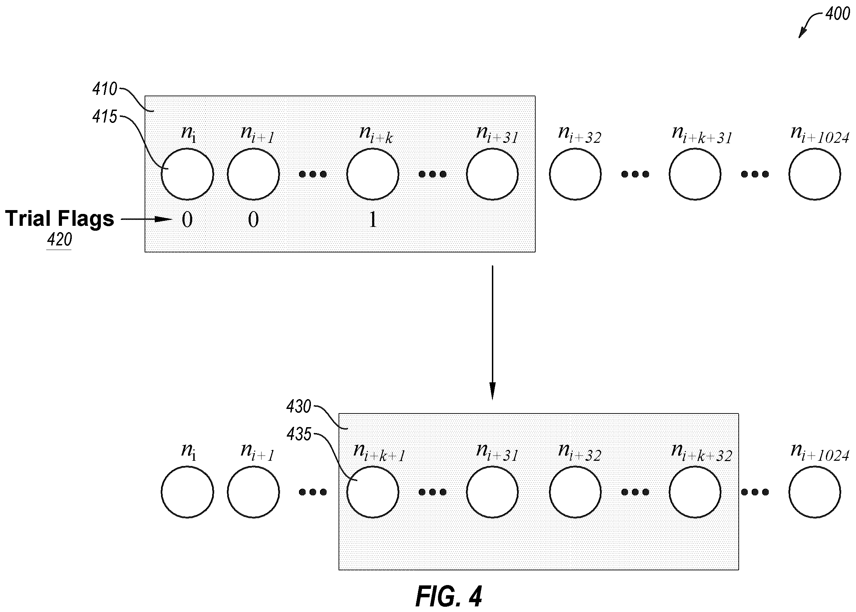

Operations associated with the trial step are performed in a sequential manner by a first computing core (i.e., a "trial kernel"), and operations associated with the update step are performed by a separate second computing core (i.e., an "update kernel"). Figure 4 is a diagram of an example embodiment of operations relating to sequential selection and trialing of one or more variables included in a set of variables 400 according to at least one embodiment of the present disclosure. For example, the set of variables 400 may include the variables included in the first group of variables 315 and/or the Nth group of variables 325 described in relation to the computer architecture 300 of Figure 3, the first group of variables 212 and/or the Nth group of variables 214 described in relation to the multi-core computer processor architecture 200 of Figure 2, and/or the optimization problem variables 110 as described in relation to the system 100 of Figure 1. The set of variables 400 may include, as an example, 1,024 variables as represented by the variables labeled from $n_i$ to $n_{i+1024}$. In some embodiments, each variable included in the set of variables 400 may be represented as a bit that includes two states (in the case of binary bits) or more states (in the case of non-binary bits).

Turning to the example illustrated in Figure 4, a first group of variables 410 that is a sub-set of the set of 1,024 variables are trialed in parallel to determine whether changing the states of one or more variables 415 included in the first group 410 may improve an output solution of the optimization problem to which the variables 415 correspond. Whether the output solution of the optimization problem is improved by changing the state of a particular variable may be determined by computing a change in energy relating to changes in the local field matrix corresponding to the first group of variables 410, in which the changes in the local field matrix may in turn be based on comparing the computed local field matrix associated with a proposed state configuration to a local field matrix of the first group of variables 410 without the proposed state configuration. In this and other examples, the first group of variables 410 may include thirty-two variables ranging from the first variable, $n_i$, to a thirty-second variable, $n_{i+31}$.

In some embodiments, a trial flag 420 may be assigned to each of the variables 415 included in the first group 410 in which the trial flag 420 indicates whether the state configuration corresponding to the same variable 415 as the trial flag 420 has been accepted. For example, the trial flag 420 may be represented by a binary bit in which a first value of the binary bit (e.g., 0) indicates the proposed state configuration is rejected and a second value of the binary bit (e.g., 1) indicates the proposed state configuration is accepted.

Trialing state configurations for the variables 415 included in the first group 410 is performed in parallel such that each of the variables 415 is trialed simultaneously. After trialing the variables 415 in the first group 410, the local field matrix corresponding to the set of variables $n_i$ through $n_{i+1024}$ may be updated based on any accepted state configurations (i.e., any variables 415 that include a trial flag 420 with a value indicating an accepted state configuration). A second group of variables 430 is selected after the local field matrix associated with the first group 410 has been updated such that the trial step is sequentially performed on the second group of variables 430. In some embodiments, the second group of variables 430 may include the same or a similar number of variables as the first group of variables 410, and the second group 430 may include variables 435 starting from a variable 415 included in the first group 410 that includes an accepted state configuration.

As illustrated in Figure 4, a variable included in the first group 410 may be labeled as $n_{i+k}$ and include a trial flag 420 indicating that a state configuration associated with the $n_{i+k}$ variable is accepted. The second group 430 may include thirty-two variables 435 starting from the $n_{i+k}$ variable and ending with a variable labeled $n_{i+k+32}$. In these and other embodiments, the trial step and the update step may be performed with respect to the variables 435 included in the second group 430. The trial step and the update step may be sequentially performed with respect to a third group, a fourth group, etc. until a threshold number of variables included in the set of variables 400 have been trialed and corresponding local field matrices have been computed.

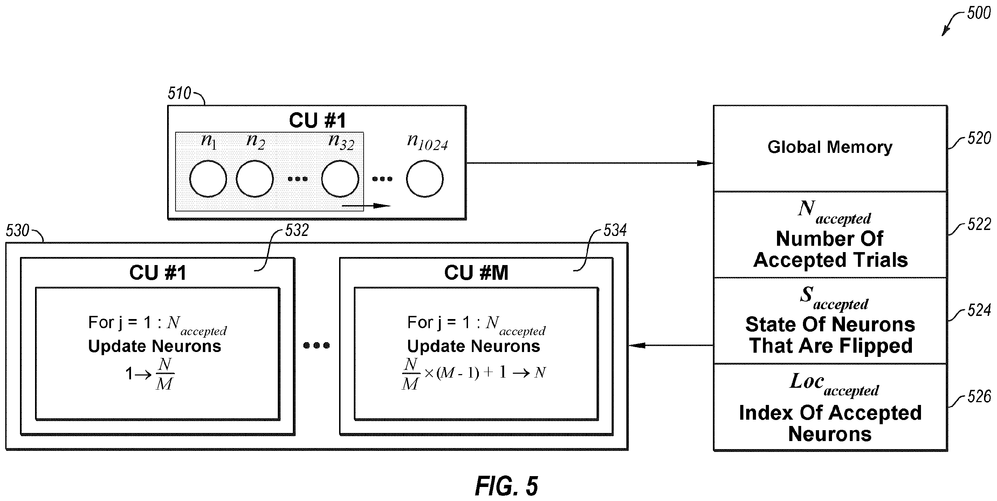

Figure 5 is a diagram of an example embodiment of a computer system 500 illustrating communication between a trial kernel 510 and an update kernel 530 relating to operations of the trial step and the update step according to at least one embodiment of the present disclosure. The trial kernel 510 includes a plurality of computing cores that are each configured to perform operations relating to trialing state configurations for one or more variables as described in relation to the system 100, the multi-core computer processor architecture 200, the computer architecture 300, and/or the set of variables 400 of Figures 1, 2, 3, and/or 4, respectively. In some embodiments, the trial kernel 510 may be configured to trial state configurations for the variables, which may be divided into a number of groups corresponding to a number of computing cores included in the trial kernel 510, and determine whether one or more of the trialed state configurations are to be accepted or rejected.

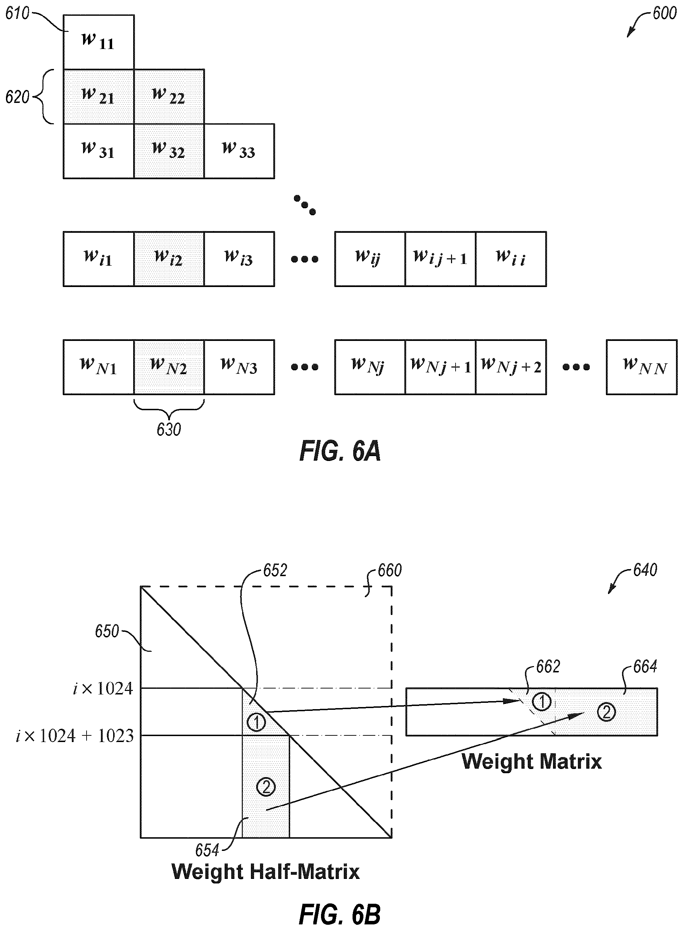

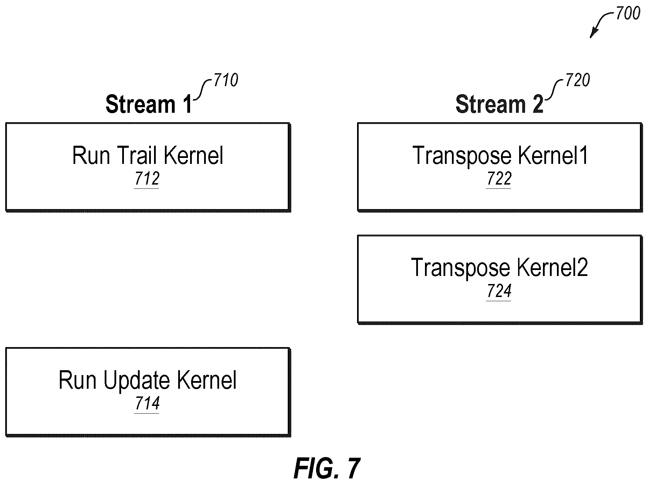

In some embodiments, the trial kernel 510 may communicate information pertaining to the trialed state configurations to a global memory 520 from which the update kernel 530 may obtain the information about the trialed state configurations and update local field matrices corresponding to each group of variables included in the trial kernel 510. In these and other embodiments, the global memory 520 may receive information from the trial kernel 510, such as a number of accepted state configuration trials 522 $N_{accepted}$, corresponding states of variables that include accepted state configuration trials 524 $S_{accepted}$, and/or an index of the variables including accepted state configuration trials 526 within corresponding local field matrices $LOC_{accepted}$. Additionally or alternatively, the global memory 520 may include weights between each pair of variables included in the trial kernel 510 in which a particular weight represents a degree of influence a state of a first variable has on a state of a second variable with respect to the local field matrix values of the first variable and the second variable as described in further detail in relation to the descriptions of Figures 6A, 6B, and 7. The trial kernel 510 may send information to the global memory 520 after the trial kernel 510 has completed trialing state configurations relating to the variables. As such, the update kernel 530 may receive the state information from the global memory 520 under the assumption that operations of the trial kernel 510 have concluded.

The update kernel 530 includes various computing cores, such as a first computing core 532 and an Mth computing core 534. A number of computing cores included in the update kernel 530 may be the same as or similar to the number of computing cores included in the trial kernel 510 such that the grouping of variables used in the trial kernel 510 may be translated to the update kernel 530. Additionally or alternatively, the variables trialed in the trial kernel 510 may be regrouped depending on the number and/or processing power of the computing cores included in the update kernel 530. For example, the first computing core 532 may include variables having indices between one and $N/M$ in which $N$ represents the total number of variables and $M$ represents the total number of computing cores, while the Mth computing core 534 includes variables having indices between $\frac{N}{M}(M-1)+1$ and $N$.

The computing cores of the update kernel 530 are configured to obtain the information stored on the global memory 520 and compute updates to the local field matrices for each group of variables that include accepted state configuration trials. The local field matrices corresponding to a particular group of variables, X, may be represented by the following relationship:

$$LF_k(X) = -\sum w_{ki} x_i - b_k \qquad (1)$$

in which $LF_k(X)$ represents the local field matrix of the particular group of variables, which may be computed based on a connection weight between a kth variable and an ith variable included in the particular group, $w_{ki}$; a value of a state corresponding to the ith variable, $x_i$; and a bias, $b_k$, corresponding to the kth variable.

Modifications, additions, or omissions may be made to the computer system 500 without departing from the scope of the present disclosure. For example, the designations of different elements in the manner described is meant to help explain concepts described herein and is not limiting. Further, the computer system 500 may include any number of other elements or may be implemented within other systems or contexts than those described.

Figure 6A illustrates an example embodiment of a half-weight matrix 600 according to at least one embodiment of the present disclosure. In some embodiments, a weight matrix may include a weight between each pair of variables that indicates an effect a state of a first variable of the pair of variables has on the local field matrix element corresponding to a second variable of the pair. In these and other embodiments, the weight between each pair of variables may be bidirectional such that the effect of the first variable's state on the local field matrix element corresponding to the second variable of the pair may be equivalent to an effect of the second variable's state on the local field matrix element corresponding to the first variable. As such, a first weight, $w_{ij}$, involving variable $i$ and variable $j$ may be equal to a second weight, $w_{ji}$, between the same two variables.

The half-weight matrix 600 may include elements 610 indicating the relationships between the pairs of variables. A particular row of the half-weight matrix 600 and a particular column of the half-weight matrix 600 may be read to update all of the elements of a local field matrix based on a particular state change of the single variable that corresponds to reading the particular row and the particular column of the half-weight matrix 600. As illustrated in Figure 6A, for example, a second row 620 and a second column 630 of the half-weight matrix 600 may be read to update an element of the local field matrix corresponding to a variable having an index of two.

Because the weights between pairs of variables are bidirectional, the half-weight matrix 600 may fully represent relationships between each pair of variables relating to a particular optimization problem while only including half of the weight elements relative to a fully populated weight matrix. As such, storing the half-weight matrix 600 in global memory may utilize less memory resources than storing a fully populated weight matrix that includes the same information as the half-weight matrix 600. Figure 6B illustrates transposition of a weight matrix 640 to global memory according to at least one embodiment of the present disclosure.

The weight matrix 640 may be made of a first section 650 that includes weight elements, such as weight element 652, and columns, such as column 654, that have already been written to a global memory. In other words, the first section 650 may represent a first half-weight matrix that has been stored on the global memory. The weight matrix 640 may also include a second section 660 that includes weight elements, such as weight element 662, and rows, such as row 664, that are not written to the global memory. In these and other embodiments, the second section 660 may include weight elements that are the bidirectional counterparts of the weight elements included in the first section 650 that are stored on the global memory. For example, the weight element 662 may be a bidirectional counterpart of the weight element 652, and the row 664 may include the bidirectional counterparts of the column 654.

Modifications, additions, or omissions may be made to the half-weight matrix 600 and/or the weight matrix 640 without departing from the scope of the present disclosure. For example, the designations of different elements in the manner described is meant to help explain concepts described herein and is not limiting. Further, the half-weight matrix 600 and/or the weight matrix 640 may include any number of other elements or may be implemented within other systems or contexts than those described.

Figure 7 illustrates an example embodiment of a computer architecture 700 that facilitates hybrid weight access according to at least one embodiment of the present disclosure. Hybrid weight access may facilitate storing and/or retrieving the weights stored in the global memory by the trial kernel and/or the update kernel, respectively, during operations of either or both of the trial kernel and the update kernel. Consequently, a hybrid weight access process may reduce runtime of the trial kernel and the update kernel with respect to operations of either kernel involving the weights stored in the global memory.

In some embodiments, the computer architecture 700 may include two processes operating in parallel in a first stream 710 and a second stream 720. The first stream 710 may include a trial kernel 712 that performs operations associated with the trial step and an update kernel 715 that performs operations associated with the update step as described in relation to the system 100, the multi-core computer processor architecture 200, and/or the computer architecture 300 of Figures 1, 2, and/or 3, respectively. The second stream 720 may include one or more transpose kernels, such as a first transpose kernel 722 and a second transpose kernel 724, that are included in the local memory along with the trial kernel 712 and the update kernel 714 of the first stream 710.

The transpose kernels may be configured to retrieve one or more particular weights from a weight matrix stored in a global memory (e.g., one or more rows of weights) such that the update kernel 714 may access the particular weights without communicating with the global memory. In some embodiments, the trial kernel 712 and the update kernel 714 may sequentially perform the trial step and the update step a number of times (i.e., a number of "runs" of the trial step and the update step) based on the number of variables being sampled by the trial kernel 712 and the update kernel 714. Sequentially early runs of the trial step may be performed at higher temperatures indicating that a greater number of proposed state configurations may be proposed and/or accepted relative to runs performed at lower temperatures. Consequently, the update kernel 714 may perform a greater number of updates to local field matrices corresponding to the accepted state configurations, which may cause the update kernel 714 to reference weights stored in the global memory at a higher frequency relative to runs occurring at lower temperatures. To facilitate the update step and reduce runtime of the update kernel 714, the second stream 720 including the transpose kernels may preemptively retrieve one or more weights from the global memory such that the update kernel 714 may retrieve the corresponding weights by communicating with the local memory in lieu of the global memory. The weights preemptively retrieved by the transpose kernels in parallel with operations of the trial kernel 712 and/or the update kernel 714 may include one or more rows and/or columns of weights corresponding to the variables that are involved with accepted state configurations.

In these and other embodiments, fewer proposed state configurations may be accepted as the temperature of the variables decreases over the course of the sequential runs performed by the update kernel 714. Because of the decreased number of accepted state configurations, runtime of operations performed by the trial kernel 712 and/or the update kernel 714 may decrease such that runtime of operations performed by the transpose kernels becomes greater relative to the runtime of the trial kernel 712 and/or the update kernel 714. Thus, operations of the transpose kernels included in the second stream 720 may be turned off at lower temperatures, and the update kernel 714 may retrieve weights from a weight matrix (e.g., a half-weight matrix) stored in the global memory rather than from the transpose kernels.

Modifications, additions, or omissions may be made to the computer architecture 700 without departing from the scope of the present disclosure. For example, the designations of different elements in the manner described is meant to help explain concepts described herein and is not limiting. Further, the computer architecture 700 may include any number of other elements or may be implemented within other systems or contexts than those described.

Figure 8 is a flowchart of an example method 800 of performing operations relating to an optimization problem using a multi-core computer processor architecture according to at least one embodiment of the present disclosure. The method 800 may be performed by any suitable system, apparatus, or device. For example, the variable-adjustment module 120 or the computation module 130 may perform one or more operations associated with the method 800. Although illustrated with discrete blocks, the steps and operations associated with one or more of the blocks of the method 800 may be divided into additional blocks, combined into fewer blocks, or eliminated, depending on the particular implementation.

The method 800 may begin at block 810, where an optimization problem and multiple variables corresponding to the optimization problem are obtained. As described in relation to the system 100 and the multi-core computer processor architecture 200 of Figures 1 and 2, respectively, the optimization problem may include various variables that affect an outcome of the optimization problem. Solving the optimization problem may entail adjusting values corresponding to one or more of the variables to affect a particular outcome, such as a maximum value or a minimum value of the outcome. A value of a particular variable may be represented by a state of the variable, and changing a state of the particular variable may result in a corresponding change in the value of the particular variable. In some embodiments, the variables may include binary states such that the states of the variables may be represented by a first state (e.g., zero or "off") or a second state (e.g., one or "on"). Additionally or alternatively, the variables may include non-binary states such that the states of the variables may be represented by multiple different states.

At block 820, weights corresponding to the variables may be obtained. A weight of a particular variable may represent a degree to which the particular variable affects the outcome of the optimization problem. In some embodiments, the degree to which the particular variable affects the outcome of the optimization problem may depend on how a state of the particular variable affects the states of other variables associated with the optimization problem. As such, the particular variable may be involved with multiple pairwise weights between the particular variable and each other variable included in the optimization problem.

At block 830, each of the variables may be divided into a group. In some embodiments, the variables may be divided into a number of groups based on specifications of a computer system that is processing the variables and solving the optimization problem. For example, the number of groups into which the variables may be divided may be determined based on a number of computing cores included in a multi-core computer processor and/or the processing capabilities of each of the computing cores.

At block 840, group local field matrices corresponding to each of the groups of variables are obtained. A particular group local field matrix may indicate a value of a corresponding group of variables and/or an effect the corresponding group of variables has on the outcome of the optimization problem. In some embodiments, each local field matrix may represent an energy corresponding to a particular state of a particular variable, and the group local field matrix may represent an energy corresponding to the group of variables based on the states of the variables included in the group.

At block 850, a stochastic trial process is performed with respect to each group of variables. In some embodiments, performing the stochastic process with respect to a particular group of variables may include performing trials during the trial step with respect to one or more of the variables included in the particular group. Each trial may determine whether to change a respective state of a respective variable based on corresponding weights and local field values of the particular group of variables.

At block 860, all of the group local field matrices are updated. In some embodiments, the group local field matrices associated with each other group may be affected by changes to the group local field matrix of a particular group of variables. As such, all of the group local field matrices may be updated after accepting state configurations corresponding to any one group of variables. Updating the group local field matrices may involve computations based on the states of the variables included in each group and associated weights of the variables with respect to each other variable as described in relation to the update step.

In some embodiments, the operations performed at blocks 850 and 860 may be performed in sequence and repeated iteratively for each group of variables until all of the groups of variables have been trialed according to the operations at block 850 and corresponding updates for all of the group local field matrices have been completed according to the operations at block 860.

At block 870, a solution to the optimization problem is determined. In some embodiments, the solution to the optimization problem may include a minimization or a maximization of one or more characteristics or parameters of the optimization problem based on reconfiguring the states of the variables. Additionally or alternatively, the solution to the optimization problem may include determining the states of the variables such that the outcome of the optimization problem approaches a particular value or range of values. In these and other embodiments, the solution to the optimization problem may be computed based on one or more of the group local field matrices updated after a number of sequential runs through the trial step and the update step as described in relation to Figures 1-7.

Modifications, additions, or omissions may be made to the method 800 without departing from the scope of the disclosure. For example, the designations of different elements in the manner described is meant to help explain concepts described herein and is not limiting. Further, the method 800 may include any number of other elements or may be implemented within other systems or contexts than those described.

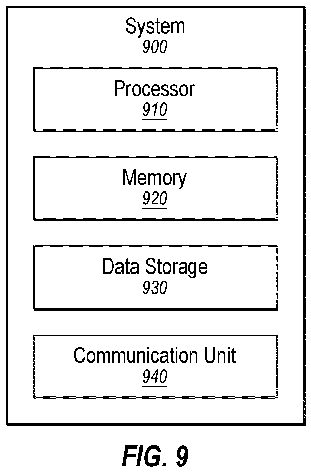

Figure 9 is an example computing system 900 according to at least one embodiment described in the present disclosure. The computing system 900 may include a processor 910, a memory 920, a data storage 930, and/or a communication unit 940, which all may be communicatively coupled. Any or all of the system 100 of Figure 1 may be implemented as a computing system consistent with the computing system 900.

Generally, the processor 910 may include any suitable special-purpose or general-purpose computer, computing entity, or processing device including various computer hardware or software modules and may be configured to execute instructions stored on any applicable computer-readable storage media. For example, the processor 910 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in Figure 9, it is understood that the processor 910 may include any number of processors distributed across any number of network or physical locations that are configured to perform individually or collectively any number of operations described in the present disclosure. In some embodiments, the processor 910 may interpret and/or execute program instructions and/or process data stored in the memory 920, the data storage 930, or the memory 920 and the data storage 930. In some embodiments, the processor 910 may fetch program instructions from the data storage 930 and load the program instructions into the memory 920.

After the program instructions are loaded into the memory 920, the processor 910 may execute the program instructions, such as instructions to cause the computing system 900 to perform the operations of the method 800 of Figure 8. For example, the computing system 900 may execute the program instructions to obtain the optimization problem and its associated variables, obtain weights corresponding to the variables, divide the variables into groups, obtain group local field matrices for each group of variables, perform the stochastic trial process with respect to each group of variables, update all of the group local field matrices based on each stochastic trial process, and determine a solution to the optimization problem.

The memory 920 and the data storage 930 may include computer-readable storage media or one or more computer-readable storage mediums for having computer-executable instructions or data structures stored thereon. Such computer-readable storage media may be any available media that may be accessed by a general-purpose or special-purpose computer, such as the processor 910. For example, the memory 920 and/or the data storage 930 may include the optimization problem variables 110, the updated local field matrices 125, or the optimization problem solution 135 of Figure 1. In some embodiments, the computing system 900 may or may not include either of the memory 920 and the data storage 930.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 910 to perform a particular operation or group of operations.

The communication unit 940 may include any component, device, system, or combination thereof that is configured to transmit or receive information over a network. In some embodiments, the communication unit 940 may communicate with other devices at other locations, the same location, or even other components within the same system. For example, the communication unit 940 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 940 may permit data to be exchanged with a network and/or any other devices or systems described in the present disclosure. For example, the communication unit 940 may allow the system 900 to communicate with other systems, such as computing devices and/or other networks.

One skilled in the art, after reviewing this disclosure, may recognize that modifications, additions, or omissions may be made to the system 900 without departing from the scope of the present disclosure. For example, the system 900 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the claims.

**In** some embodiments, the different components, modules, engines, and services described herein may be implemented as objects or processes that execute on a computing system (e.g., as separate threads). While some of the systems and processes described herein are generally described as being implemented in software (stored on and/or executed by general purpose hardware), specific hardware implementations or a combination of software and specific hardware implementations are also possible and contemplated.

Terms used in the present disclosure and especially in the appended claims (e.g., bodies of the appended claims) are generally intended as "open terms" (e.g., the term "including" should be interpreted as "including, but not limited to.").

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is expressly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase preceding two or more alternative terms, whether in the description, claims, or drawings, should be understood to contemplate the possibilities of including one of the terms, either of the terms, or both of the terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions.

**Claims**

1. A method, comprising:

storing on a global memory (220; 520), weight information related to weights that correspond to a plurality of variables (212, 214; 415, 435) that each represent a characteristic related to an optimization problem, each respective weight relating to one or more relationships between a respective variable and one or more other variables related to the optimization problem;

performing a semi-sequential trial process with respect to a plurality of groups (410, 430) of variables of the plurality of variables in which each respective group includes a sub-set of variables of the plurality of variables, the semi-sequential trial process including:

obtaining (820), by a trial kernel (510) that includes a plurality of trial computing cores, first weights (225) from the weight information stored on the global memory, the first weights corresponding to a first group of first variables of the plurality of groups;

obtaining (840), by the trial kernel, first local field values that correspond to the first group of first variables, the first local field values being obtained from a first group local field matrix of a plurality of group local field matrices (230), each group local field matrix of the plurality of local field matrices corresponding to a respective group of variables and including local field values that each indicate interactions between a respective variable and the other variables of the plurality of variables, as influenced by the respective weights of the respective variables;

performing (850), by the trial kernel based on the first weights and the first local field values, a first stochastic process with respect to the first group, the first stochastic process being with respect to changing a respective state of one or more of the first variables of the first group, the first stochastic process including performing, in parallel, first trials with respect to one or more of the first variables in which a respective first trial determines whether to change a respective state of a respective first variable;

storing, by the trial kernel on a global memory, first results of the first stochastic process;

accessing the first results from the global memory by an update kernel (530) that includes a plurality of update computing cores (532, 534);

updating (860), by the update kernel based on the first results, all of the group local field matrices;

obtaining (820), by the trial kernel, second weights (225) from the weight information stored on the global memory, the second weights corresponding to a second group of second variables of the plurality of groups;

obtaining (840), by the trial kernel after the updating of the group local field matrices by the update kernel, second local field values that correspond to the second group of second variables, the first local field values being obtained from a second group local field matrix of the plurality of group local field matrices;

performing (850), by the trial kernel based on the second weights and the second local field values, a second stochastic process with respect to the second group, the second stochastic process being with respect to changing a respective state of one or more of the second variables of the second group, the second stochastic process including performing, in parallel, second trials with respect to one or more of the second variables in which a respective second trial determines whether to change a respective state of a respective second variable;

storing, by the trial kernel on a global memory, second results of the second stochastic process;

accessing the second results from the global memory by the update kernel; and

updating (860), by the update kernel based on the second results, all of the group local field matrices; and

determining (870) a solution to the optimization problem based on the semi-sequential trial process.

2. The method of claim 1, wherein the weight information includes a weight matrix (640) that includes a weight of each variable with respect to each other variable included in the optimization problem.

3. The method of claim 2, wherein the weight matrix is a half-weight matrix (600; 650) that includes the weight of each respective variable with respect to each other variable included in the optimization problem but not a bidirectional weight between each other variable and each respective variable.

4. The method of claim 1, wherein a number of the first trials being performed for the first stochastic process is determined based on a respective temperature associated with each respective first variable, wherein:

the temperature begins at a first temperature; and
the temperature updates to a second temperature (240) after updating all of the group local field matrices based on the results of the first stochastic process, the second temperature being lower than the first temperature.

5. The method of claim 1, wherein the variables (212, 214; 415, 435) are divided into the plurality of groups (410, 430) based on one or more of:

a number of trial computing cores of the trial kernel (510);
a number of update computing cores of the update kernel (530); or
a processing capability of one or more of the trial computing cores or one or more of the update computing cores.

6. The method of claim 1, wherein the optimization problem is a quadratic unconstrained binary optimization, QUBO, problem.

7. A system, comprising:

a trial kernel (510) including a plurality of trial computing cores; an update kernel (530) including a plurality of update computing cores (532, 534);
an off-chip global memory (220; 520) having stored thereon weight information related to weights (225) that correspond to a plurality of variables (212, 214; 415, 435) that each represent a characteristic related to an optimization problem, each respective weight relating to one or more relationships between a respective variable and one or more other variables related to the optimization problem; and
one or more non-transitory computer-readable storage media (920; 930) configured to store instructions that, in response to being executed by the trial kernel and the update kernel, cause the system to perform operations, the operations comprising:
performing a semi-sequential trial process with respect to a plurality of groups (410, 430) of variables of the plurality of variables in which each respective group includes a sub-set of variables of the plurality of variables, the semi-sequential trial process including:

obtaining (820), by the trial kernel, first weights from the weight information stored on the global memory, the first weights corresponding to a first group of first variables of the plurality of groups;
obtaining (840), by the trial kernel, first local field values that correspond to the first group of first variables, the first local field values being obtained from a first group local field matrix of a plurality of group local field matrices (230), each group local field matrix of the plurality of local field matrices corresponding to a respective group of variables and including local field values that each indicate interactions between a respective variable and the other variables of the plurality of variables, as influenced by the respective weights of the respective variables
performing (850), by the trial kernel based on the first weights and the first local field values, a first stochastic process with respect to the first group, the first stochastic process being with respect to changing a respective state of one or more of the first variables of the first group, the first stochastic process including performing, in parallel, first trials with respect to one or more of the first variables in which a respective first trial determines whether to change a respective state of a respective first variable;
storing, by the trial kernel on the global memory, first results of the first stochastic process;
accessing the first results from the global memory by an update kernel that includes a plurality of update computing cores;
updating (860), by the update kernel based on the first results, all of the group local field matrices;

obtaining (820), by the trial kernel, second weights from the weight information stored on the global memory, the second weights corresponding to a second group of second variables of the plurality of groups;

obtaining (840), by the trial kernel after the updating of the group local field matrices by the update kernel, second local field values that correspond to the second group of second variables, the second local field values being obtained from a second group local field matrix of the plurality of group local field matrices;

performing (850), by the trial kernel based on the second weights and the second local field values, a second stochastic process with respect to the second group, the second stochastic process being with respect to changing a respective state of one or more of the second variables of the second group, the second stochastic process including performing, in parallel, second trials with respect to one or more of the second variables in which a respective second trial determines whether to change a respective state of a respective second variable;

storing, by the trial kernel on the global memory, second results of the second stochastic process; accessing the second results from the global memory by the update kernel; and

updating (860), by the update kernel based on the second results, all of the group local field matrices; and

determining (870) a solution to the optimization problem based on the semi-sequential trial process.

8. The system of claim 7, wherein the weight information includes a weight matrix (640) that includes a weight of each variable with respect to each other variable included in the optimization problem.

9. The system of claim 8, wherein the weight matrix is a half-weight matrix (600; 650) that includes the weight of each respective variable with respect to each other variable included in the optimization problem but not a bidirectional weight between each other variable and each respective variable.

10. The system of claim 7, wherein a number of the first trials being performed for the first stochastic process is determined based on a respective temperature associated with each respective first variable, wherein:

the temperature begins at a first temperature; and
the temperature updates to a second temperature (240) after updating all of the group local field matrices based on the results of the first stochastic process, the second temperature being lower than the first temperature.

11. The system of claim 7, wherein the variables (212, 214; 415, 435) are divided into the plurality of groups (410, 430) based on one or more of:

a number of trial computing cores of the trial kernel (510);
a number of update computing cores of the update kernel (530); or
a processing capability of one or more of the trial computing cores or one or more of the update computing cores.

12. The system of claim 7, wherein the optimization problem is a quadratic unconstrained binary optimization, QUBO, problem.

13. One or more non-transitory computer-readable storage media (920; 930) configured to store instructions that, in response to being executed by a computer system (900), cause the computer system to perform operations, the operations comprising:

storing on a global memory (220; 520) of the computer system, weight information related to weights (225) that correspond to a plurality of variables (212, 214; 415, 435) that each represent a characteristic related to an optimization problem, each respective weight relating to one or more relationships between a respective variable and one or more other variables related to the optimization problem;

performing a semi-sequential trial process with respect to a plurality of groups (410, 430) of variables of the plurality of variables in which each respective group includes a sub-set of variables of the plurality of variables, the semi-sequential trial process including:

obtaining (820), by a trial kernel (510) of the computer system that includes a plurality of trial computing cores, first weights from the weight information stored on the global memory, the first weights corresponding to a first group of first variables of the plurality of groups;

obtaining (840), by the trial kernel, first local field values that correspond to the first group of first variables, the first local field values being obtained from a first group local field matrix of a plurality of group local field matrices (230), each group local field matrix of the plurality of local field matrices corresponding to a

14

respective group of variables and including local field values that each indicate interactions between a respective variable and the other variables of the plurality of variables, as influenced by the respective weights of the respective variables;

performing (850), by the trial kernel based on the first weights and the first local field values, a first stochastic process with respect to the first group, the first stochastic process being with respect to changing a respective state of one or more of the first variables of the first group, the first stochastic process including performing, in parallel, first trials with respect to one or more of the first variables in which a respective first trial determines whether to change a respective state of a respective first variable;

storing, by the trial kernel on the global memory, first results of the first stochastic process;

accessing the first results from the global memory by an update kernel (530) of the computer system that includes a plurality of update computing cores (532, 534);

updating (860), by the update kernel based on the first results, all of the group local field matrices;

obtaining (820), by the trial kernel, second weights from the weight information stored on the global memory, the second weights corresponding to a second group of second variables of the plurality of groups;

obtaining (840), by the trial kernel after the updating of the group local field matrices by the update kernel, second local field values that correspond to the second group of second variables, the first local field values being obtained from a second group local field matrix of the plurality of group local field matrices;

performing (850), by the trial kernel based on the second weights and the second local field values, a second stochastic process with respect to the second group, the second stochastic process being with respect to changing a respective state of one or more of the second variables of the second group, the second stochastic process including performing, in parallel, second trials with respect to one or more of the second variables in which a respective second trial determines whether to change a respective state of a respective second variable;

storing, by the trial kernel on the global memory, second results of the second stochastic process;

accessing the second results from the global memory by the update kernel; and

updating (860), by the update kernel based on the second results, all of the group local field matrices; and

determining (870) a solution to the optimization problem based on the semi-sequential trial process.

14. The one or more non-transitory computer-readable storage media (920; 930) of claim 13, wherein the weight information includes a weight matrix (640) that includes a weight of each variable with respect to each other variable included in the optimization problem.

15. The one or more non-transitory computer-readable storage media (920; 930) of claim 14, wherein the weight matrix is a half-weight matrix (600; 650) that includes the weight of each respective variable with respect to each other variable included in the optimization problem but not a bidirectional weight between each other variable and each respective variable.

16. The one or more non-transitory computer-readable storage media (920; 930) of claim 13, wherein a number of the first trials being performed for the first stochastic process is determined based on a respective temperature associated with each respective first variable, wherein:

the temperature begins at a first temperature; and

the temperature updates to a second temperature (240) after updating all of the group local field matrices based on the results of the first stochastic process, the second temperature being lower than the first temperature.

17. The one or more non-transitory computer-readable storage media of claim 13, wherein the variables (212, 214; 415, 435) are divided into the plurality of groups (410, 430) based on one or more of:

a number of trial computing cores of the trial kernel (510);

a number of update computing cores of the update kernel (530); or

a processing capability of one or more of the trial computing cores or one or more of the update computing cores.

**Patentansprüche**

1. Verfahren, umfassend:

Speichern in einem globalen Speicher (220; 520) von Gewichtungsinformationen, die sich auf Gewichtungen beziehen, die einer Vielzahl von Variablen (212, 214; 415, 435) entsprechen, die jeweils ein Merkmal repräsentieren, das sich auf ein Optimierungsproblem bezieht, wobei sich jede jeweilige Gewichtung auf eine oder mehrere Beziehungen zwischen einer jeweiligen Variablen und einer oder mehreren anderen Variablen bezieht, die sich auf das Optimierungsproblem beziehen;

Durchführen eines halbsequenziellen Versuchsprozesses in Bezug auf eine Vielzahl von Gruppen (410, 430) von Variablen der Vielzahl von Variablen, wobei jede jeweilige Gruppe einen Teilsatz von Variablen der Vielzahl von Variablen einschließt, wobei der halbsequenzielle Versuchsprozess einschließt:

Erhalten (820) von ersten Gewichtungen (225) aus den im globalen Speicher gespeicherten Gewichtungsinformationen durch einen Versuchskern (510), der eine Vielzahl von Versuchsrechnerkernen beinhaltet, wobei die ersten Gewichtungen einer ersten Gruppe erster Variablen der Vielzahl von Gruppen entsprechen;

Erhalten (840) durch den Versuchskern erster lokaler Feldwerte, die der ersten Gruppe erster Variablen entsprechen, wobei die ersten lokalen Feldwerte aus einer lokalen Feldmatrix einer ersten Gruppe der Vielzahl von lokalen Gruppen-Feldmatrizen (230) erhalten werden, wobei jede lokale Gruppen-Feldmatrix der Vielzahl von Feldmatrizen einer jeweiligen Gruppe von Variablen entspricht, und lokale Feldwerte beinhaltet, die jeweils Wechselwirkungen zwischen einer jeweiligen Variablen und den anderen Variablen der Vielzahl von Variablen angeben, wie sie von den jeweiligen Gewichtungen der jeweiligen Variablen beeinflusst werden;

Durchführen (850), durch den Versuchskern basierend auf den ersten Gewichtungen und den ersten lokalen Feldwerten, eines ersten stochastischen Prozesses in Bezug auf die erste Gruppe, wobei der erste stochastische Prozess in Bezug auf die Änderung eines jeweiligen Zustands einer oder mehrerer der ersten Variablen der ersten Gruppe ist, wobei der erste stochastische Prozess parallel Durchführen erster Versuche in Bezug auf eine oder mehrere der ersten Variablen einschließt, bei denen ein jeweiliger erster Versuch bestimmt, ob ein jeweiliger Zustand einer jeweiligen ersten Variablen zu ändern ist;

Speichern erster Ergebnisse des ersten stochastischen Prozesses durch den Versuchskern in einem globalen Speicher;

Zugreifen auf die ersten Ergebnisse aus dem globalen Speicher durch einen Aktualisierungskern (530), der eine Vielzahl von Aktualisierungsberechnungskernen (532, 534) einschließt;

Aktualisieren (860) aller der lokalen Gruppen-Feldmatrizen durch den Aktualisierungskern basierend auf den ersten Ergebnissen;

Erhalten (820) durch den Versuchskern zweiter Gewichtungen (225) aus den im globalen Speicher gespeicherten Gewichtungsinformationen, wobei die zweiten Gewichtungen einer zweiten Gruppe zweiter Variablen der Vielzahl von Gruppen entsprechen;

Erhalten (840) durch den Versuchskern nach dem Aktualisieren der lokalen Gruppen-Feldmatrizen durch den Aktualisierungskern von zweiten lokalen Feldwerten, die der zweiten Gruppe von zweiten Variablen entsprechen, wobei die ersten lokalen Feldwerte aus einer lokalen Feldmatrix einer zweiten Gruppe der Vielzahl von lokalen Gruppen-Feldmatrizen erhalten werden;

Durchführen (850), durch den Versuchskern basierend auf den zweiten Gewichtungen und den zweiten lokalen Feldwerten, eines zweiten stochastischen Prozesses in Bezug auf die zweite Gruppe, wobei der zweite stochastische Prozess in Bezug auf ein Ändern eines jeweiligen Zustands einer oder mehrerer der zweiten Variablen der zweiten Gruppe ist, wobei der zweite stochastische Prozess parallel Durchführen zweiter Versuche in Bezug auf eine oder mehrere der zweiten Variablen einschließt, bei denen ein jeweiliger zweiter Versuch bestimmt, ob ein jeweiliger Zustand einer jeweiligen zweiten Variablen zu ändern ist;

Speichern zweiter Ergebnisse des zweiten stochastischen Prozesses durch den Versuchskern in einem globalen Speicher;

Zugreifen auf die zweiten Ergebnisse aus dem globalen Speicher durch den Aktualisierungskern; und

Aktualisieren (860) aller der lokalen Gruppen-Feldmatrizen durch den Aktualisierungskern basierend auf den zweiten Ergebnissen; und

Bestimmen (870) einer Lösung für das Optimierungsproblem basierend auf dem halbsequenziellen Versuchsprozess.

**2.** Verfahren nach Anspruch 1, wobei die Gewichtungsinformationen eine Gewichtungsmatrix (640) beinhalten, die eine Gewichtung jeder Variablen in Bezug auf jede andere Variable einschließt, die in dem Optimierungsproblem eingeschlossen ist.

**3.** Verfahren nach Anspruch 2, wobei die Gewichtungsmatrix eine Halbgewichtungsmatrix (600; 650) ist, welche die Gewichtung jeder jeweiligen Variablen in Bezug auf jede andere Variable, die in dem Optimierungsproblem eingeschlossen ist, aber keine bidirektionale Gewichtung zwischen jeder anderen Variablen und jeder jeweiligen Variablen einschließt.

4. Verfahren nach Anspruch 1, wobei eine Anzahl der ersten Versuche, die für den ersten stochastischen Prozess durchgeführt wird, basierend auf einer jeweiligen Temperatur bestimmt wird, die jeder jeweiligen ersten Variablen zugeordnet ist, wobei:

   die Temperatur bei einer ersten Temperatur beginnt; und
   die Temperatur nach dem Aktualisieren aller lokalen Gruppen-Feldmatrizen basierend auf den Ergebnissen des ersten stochastischen Prozesses auf eine zweite Temperatur (240) aktualisiert wird, wobei die zweite Temperatur niedriger als die erste Temperatur ist.

5. Verfahren nach Anspruch 1, wobei die Variablen (212, 214; 415, 435) basierend auf einem oder mehr in die Vielzahl von Gruppen (410, 430) aufgeteilt werden von:

   einer Anzahl an Versuchsberechnungskernen des Versuchskerns (510);
   einer Anzahl von Aktualisierungsberechnungskernen des Aktualisierungskerns (530); oder
   einer Verarbeitungsfähigkeit eines oder mehrerer der Versuchsberechnungskerne oder eines oder mehrerer der Aktualisierungsberechnungskerne.

6. Verfahren nach Anspruch 1, wobei das Optimierungsproblem ein quadratisches unbeschränktes binäres Optimierungs-, QUBO-Problem ist.

7. System, umfassend:

   einen Versuchskern (510) der eine Vielzahl von Versuchsberechnungskernen einschließt; einen Aktualisierungskern (530) der eine Vielzahl von Aktualisierungsberechnungskernen (532, 534) einschließt;
   einen globalen Off-Chip-Speicher (220; 520), der darauf gespeichert Gewichtungssinformationen aufweist, die sich auf Gewichtungen (225) beziehen, die einer Vielzahl von Variablen (212, 214; 415, 435) entsprechen, die jeweils ein Merkmal repräsentieren, das sich auf ein Optimierungsproblem bezieht, wobei sich jede jeweilige Gewichtung auf eine oder mehrere Beziehungen zwischen einer jeweiligen Variablen und einer oder mehreren anderen Variablen bezieht, die sich auf das Optimierungsproblem beziehen; und
   ein nicht-flüchtiges, computerlesbares Speichermedium (920; 930), das konfiguriert ist zum Speichern von Anweisungen, die als Reaktion auf die Ausführung durch den Versuchskern und den Aktualisierungskern das System veranlassen, Vorgänge auszuführen, wobei die Vorgänge umfassen:
   Durchführen eines halbsequenziellen Versuchsprozesses in Bezug auf eine Vielzahl von Gruppen (410, 430) von Variablen der Vielzahl von Variablen, wobei jede jeweilige Gruppe einen Teilsatz von Variablen der Vielzahl von Variablen einschließt, wobei der halbsequenzielle Versuchsprozess einschließt:

      Erhalten (820) durch den Versuchskern erster Gewichtungen aus den im globalen Speicher gespeicherten Gewichtungsinformationen, wobei die ersten Gewichtungen einer ersten Gruppe erster Variablen der Vielzahl von Gruppen entsprechen;
      Erhalten (840) durch den Versuchskern erster lokaler Feldwerte, die der ersten Gruppe erster Variablen entsprechen, wobei die ersten lokalen Feldwerte aus einer lokalen Feldmatrix einer ersten Gruppe der Vielzahl von lokalen Gruppen-Feldmatrizen (230) erhalten werden, wobei jede lokale Gruppen-Feldmatrix der Vielzahl von Feldmatrizen einer jeweiligen Gruppe von Variablen entspricht, und lokale Feldwerte einschließt, die jeweils Wechselwirkungen zwischen einer jeweiligen Variablen und den anderen Variablen der Vielzahl von Variablen angeben, wie sie von den jeweiligen Gewichtungen der jeweiligen Variablen beeinflusst werden
      Durchführen (850), durch den Versuchskern basierend auf den ersten Gewichtungen und den ersten lokalen Feldwerten, eines ersten stochastischen Prozesses in Bezug auf die erste Gruppe, wobei der erste stochastische Prozess in Bezug auf die Änderung eines jeweiligen Zustands einer oder mehrerer der ersten Variablen der ersten Gruppe ist, wobei der erste stochastische Prozess parallel Durchführen erster Versuche in Bezug auf eine oder mehrere der ersten Variablen einschließt, bei denen ein jeweiliger erster Versuch bestimmt, ob ein jeweiliger Zustand einer jeweiligen ersten Variablen zu ändern ist;
      Speichern erster Ergebnisse des ersten stochastischen Prozesses durch den Versuchskern im globalen Speicher;

Zugreifen auf die ersten Ergebnisse aus dem globalen Speicher durch einen Aktualisierungskern, der eine Vielzahl von Aktualisierungsberechnungskernen einschließt;

Aktualisieren (860) aller der lokalen Gruppen-Feldmatrizen durch den Aktualisierungskern basierend auf den ersten Ergebnissen;

Erhalten (820) durch den Versuchskern zweiter Gewichtungen aus den im globalen Speicher gespeicherten Gewichtungsinformationen, wobei die zweiten Gewichtungen einer zweiten Gruppe zweiter Variablen der Vielzahl von Gruppen entsprechen;

Erhalten (840) durch den Versuchskern nach dem Aktualisieren der lokalen Gruppen-Feldmatrizen durch den Aktualisierungskern von zweiten lokalen Feldwerten, die der zweiten Gruppe von zweiten Variablen entsprechen, wobei die zweiten lokalen Feldwerte aus einer lokalen Feldmatrix einer zweiten Gruppe der Vielzahl von lokalen Gruppen-Feldmatrizen erhalten werden;

Durchführen (850), durch den Versuchskern basierend auf den zweiten Gewichtungen und den zweiten lokalen Feldwerten, eines zweiten stochastischen Prozesses in Bezug auf die zweite Gruppe, wobei der zweite stochastische Prozess in Bezug auf die Änderung eines jeweiligen Zustands einer oder mehrerer der zweiten Variablen der zweiten Gruppe ist, der zweite stochastische Prozess parallel Durchführen zweiter Versuche in Bezug auf eine oder mehrere der zweiten Variablen einschließt, bei denen ein jeweiliger zweiter Versuch bestimmt, ob ein jeweiliger Zustand einer jeweiligen zweiten Variablen zu ändern ist;

Speichern zweiter Ergebnisse des zweiten stochastischen Prozesses durch den Versuchskern im globalen Speicher;

Zugreifen auf die zweiten Ergebnisse aus dem globalen Speicher durch den Aktualisierungskern; und

Aktualisieren (860) aller der lokalen Gruppen-Feldmatrizen durch den Aktualisierungskern basierend auf den zweiten Ergebnissen; und

Bestimmen (870) einer Lösung für das Optimierungsproblem basierend auf dem halbsequenziellen Versuchsprozess.

8. System nach Anspruch 7, wobei die Gewichtungsinformationen eine Gewichtungsmatrix (640) beinhalten, die eine Gewichtung jeder Variablen in Bezug auf jede andere Variable einschließt, die in dem Optimierungsproblem eingeschlossen ist.

9. System nach Anspruch 8, wobei die Gewichtungsmatrix eine Halbgewichtungsmatrix (600; 650) ist, welche die Gewichtung jeder jeweiligen Variablen in Bezug auf jede andere Variable, die in dem Optimierungsproblem eingeschlossen ist, aber keine bidirektionale Gewichtung zwischen jeder anderen Variablen und jeder jeweiligen Variablen einschließt.

10. System nach Anspruch 7, wobei eine Anzahl der ersten Versuche, die für den ersten stochastischen Prozess durchgeführt wird, basierend auf einer jeweiligen Temperatur bestimmt wird, die jeder jeweiligen ersten Variablen zugeordnet ist, wobei:

die Temperatur bei einer ersten Temperatur beginnt; und
die Temperatur nach dem Aktualisieren aller lokalen Gruppen-Feldmatrizen basierend auf den Ergebnissen des ersten stochastischen Prozesses auf eine zweite Temperatur (240) aktualisiert wird, wobei die zweite Temperatur niedriger als die erste Temperatur ist.

11. System nach Anspruch 7, wobei die Variablen (212, 214; 415, 435) basierend auf einem oder mehr in die Vielzahl von Gruppen (410, 430) aufgeteilt werden von:

einer Anzahl an Versuchsberechnungskernen des Versuchskerns (510);
einer Anzahl von Aktualisierungsberechnungskernen des Aktualisierungskerns (530); oder
einer Verarbeitungsfähigkeit eines oder mehrerer der Versuchsberechnungskerne oder eines oder mehrerer der Aktualisierungsberechnungskerne.

12. System nach Anspruch 7, wobei das Optimierungsproblem ein quadratisches unbeschränktes binäres Optimierungs-, QUBO-Problem ist.

13. Nicht-flüchtige computerlesbare Speichermedia/Speichermedien (920; 930), die konfiguriert sind zum Speichern von Anweisungen, die als Reaktion auf die Ausführung durch ein Computersystem (900) das Computersystem veranlassen, Vorgänge durchzuführen, wobei die Vorgänge umfassen:

Speichern in einem globalen Speicher (220; 520) des Computersystems von Gewichtungssinformationen, die sich auf Gewichtungen (225) beziehen, die einer Vielzahl von Variablen (212, 214; 415, 435) entsprechen, die jeweils ein Merkmal repräsentieren, das sich auf ein Optimierungsproblem bezieht, wobei sich jede jeweilige Gewichtung auf eine oder mehrere Beziehungen zwischen einer jeweiligen Variablen und einer oder mehreren anderen Variablen bezieht, die sich auf das Optimierungsproblem beziehen;

Durchführen eines halbsequenziellen Versuchsprozesses in Bezug auf eine Vielzahl von Gruppen (410, 430) von Variablen der Vielzahl von Variablen, wobei jede jeweilige Gruppe einen Teilsatz von Variablen der Vielzahl von Variablen einschließt, wobei der halbsequenzielle Versuchsprozess einschließt:

Erhalten (820) von ersten Gewichtungen aus den im globalen Speicher gespeicherten Gewichtungsinformationen durch einen Versuchskern (510) des Computersystems, der eine Vielzahl von Versuchsrechnerkernen einschließt, wobei die ersten Gewichtungen einer ersten Gruppe erster Variablen der Vielzahl von Gruppen entsprechen;

Erhalten (840) durch den Versuchskern erster lokaler Feldwerte, die der ersten Gruppe erster Variablen entsprechen, wobei die ersten lokalen Feldwerte aus einer lokalen Feldmatrix einer ersten Gruppe der Vielzahl von lokalen Gruppen-Feldmatrizen (230) erhalten werden, wobei jede lokale Gruppen-Feldmatrix der Vielzahl von Feldmatrizen einer jeweiligen Gruppe von Variablen entspricht, und lokale Feldwerte einschließt, die jeweils Wechselwirkungen zwischen einer jeweiligen Variablen und den anderen Variablen der Vielzahl von Variablen angeben, wie sie von den jeweiligen Gewichtungen der jeweiligen Variablen beeinflusst werden;

Durchführen (850), durch den Versuchskern basierend auf den ersten Gewichtungen und den ersten lokalen Feldwerten, eines ersten stochastischen Prozesses in Bezug auf die erste Gruppe, wobei der erste stochastische Prozess in Bezug auf die Änderung eines jeweiligen Zustands einer oder mehrerer der ersten Variablen der ersten Gruppe ist, wobei der erste stochastische Prozess parallel Durchführen erster Versuche in Bezug auf eine oder mehrere der ersten Variablen einschließt, bei denen ein jeweiliger erster Versuch bestimmt, ob ein jeweiliger Zustand einer jeweiligen ersten Variablen zu ändern ist;

Speichern erster Ergebnisse des ersten stochastischen Prozesses durch den Versuchskern im globalen Speicher;

Zugreifen auf die ersten Ergebnisse aus dem globalen Speicher durch einen Aktualisierungskern (530) des Computersystems, der eine Vielzahl von Aktualisierungsberechnungskernen (532, 534) einschließt;

Aktualisieren (860) aller der lokalen Gruppen-Feldmatrizen durch den Aktualisierungskern basierend auf den ersten Ergebnissen;

Erhalten (820) durch den Versuchskern zweiter Gewichtungen aus den im globalen Speicher gespeicherten Gewichtungsinformationen, wobei die zweiten Gewichtungen einer zweiten Gruppe zweiter Variablen der Vielzahl von Gruppen entsprechen;

Erhalten (840) durch den Versuchskern nach dem Aktualisieren der lokalen Gruppen-Feldmatrizen durch den Aktualisierungskern von zweiten lokalen Feldwerten, die der zweiten Gruppe von zweiten Variablen entsprechen, wobei die ersten lokalen Feldwerte aus einer lokalen Feldmatrix einer zweiten Gruppe der Vielzahl von lokalen Gruppen-Feldmatrizen erhalten werden;

Durchführen (850), durch den Versuchskern basierend auf den zweiten Gewichtungen und den zweiten lokalen Feldwerten, eines zweiten stochastischen Prozesses in Bezug auf die erste Gruppe, wobei der zweite stochastische Prozess in Bezug auf die Änderung eines jeweiligen Zustands einer oder mehrerer der zweiten Variablen der ersten Gruppe ist, wobei der zweite stochastische Prozess parallel Durchführen zweiter Versuche in Bezug auf eine oder mehrere der zweiten Variablen einschließt, bei denen ein jeweiliger zweiter Versuch bestimmt, ob ein jeweiliger Zustand einer jeweiligen zweiten Variablen zu ändern ist;

Speichern zweiter Ergebnisse des zweiten stochastischen Prozesses durch den Versuchskern im globalen Speicher;

Zugreifen auf die zweiten Ergebnisse aus dem globalen Speicher durch den Aktualisierungskern; und Aktualisieren (860) aller der lokalen Gruppen-Feldmatrizen durch den Aktualisierungskern basierend auf den zweiten Ergebnissen; und

Bestimmen (870) einer Lösung für das Optimierungsproblem basierend auf dem halbsequenziellen Versuchsprozess.

14. Nicht-flüchtige computerlesbare Speichermedia/Speichermedien (920; 930) nach Anspruch 13, wobei die Gewichtungsinformationen eine Gewichtungsmatrix (640) einschließen, die eine Gewichtung jeder Variablen in Bezug auf jede andere Variable einschließt, die in dem Optimierungsproblem eingeschlossen ist.

15. Nicht-flüchtige computerlesbare Speichermedia/Speichermedien (920; 930) nach Anspruch 14, wobei die Gewichtungsmatrix eine Halbgewichtungsmatrix (600; 650) ist, welche die Gewichtung jeder jeweiligen Variablen in Bezug auf jede andere Variable, die in dem Optimierungsproblem eingeschlossen ist, aber keine bidirektionale Gewichtung zwischen jeder anderen Variablen und jeder jeweiligen Variablen einschließt.

16. Nicht-flüchtige computerlesbare Speichermedia/Speichermedien (920; 930) nach Anspruch 13, wobei eine Anzahl der ersten Versuche, die für den ersten stochastischen Prozess durchgeführt wird, basierend auf einer jeweiligen Temperatur bestimmt wird, die jeder jeweiligen ersten Variablen zugeordnet ist, wobei:

die Temperatur bei einer ersten Temperatur beginnt; und
die Temperatur nach dem Aktualisieren aller lokalen Gruppen-Feldmatrizen basierend auf den Ergebnissen des ersten stochastischen Prozesses auf eine zweite Temperatur (240) aktualisiert wird, wobei die zweite Temperatur niedriger als die erste Temperatur ist.

17. Nicht-flüchtige computerlesbare Speichermedia/Speichermedien nach Anspruch 13, wobei die Variablen (212, 214; 415, 435) basierend auf einem oder mehr in die Vielzahl von Gruppen (410, 430) aufgeteilt werden von:

einer Anzahl an Versuchsberechnungskernen des Versuchskerns (510);
einer Anzahl von Aktualisierungsberechnungskernen des Aktualisierungskerns (530); oder
einer Verarbeitungsfähigkeit eines oder mehrerer der Versuchsberechnungskerne oder eines oder mehrerer der Aktualisierungsberechnungskerne.

## Revendications

1. Procédé, comprenant :

le stockage sur une mémoire (220 ; 520) globale, d'informations de poids relatives à des poids qui correspondent à une pluralité de variables (212, 214 ; 415, 435) qui représentent chacune une caractéristique liée à un problème d'optimisation, chaque poids respectif relatif à une ou plusieurs relations entre une variable respective et une ou plusieurs autres variables liées au problème d'optimisation ;
la réalisation d'un processus d'essai semi-séquentiel par rapport à une pluralité de groupes (410, 430) de variables de la pluralité de variables dans lequel chaque groupe respectif inclut un sous-ensemble de variables de la pluralité de variables, le processus d'essai semi-séquentiel incluant :

l'obtention (820), par un noyau (510) d'essai qui inclut une pluralité de coeurs de calcul d'essai, de premiers poids (225) à partir des informations de poids stockées sur la mémoire globale, les premiers poids correspondant à un premier groupe de premières variables de la pluralité de groupes ;
l'obtention (840), par le noyau d'essai, de premières valeurs de champ local qui correspondent au premier groupe de premières variables, les premières valeurs de champ local étant obtenues à partir d'une première matrice de champ local de groupe d'une pluralité de matrices (230) de champ local de groupe, chaque matrice de champ local de groupe de la pluralité de matrices de champ local correspondant à un groupe respectif de variables et incluant des valeurs de champ locales qui indiquent chacune des interactions entre une variable respective et les autres variables de la pluralité de variables, telles qu'influencées par les poids respectifs des variables respectives ;
la réalisation (850), par le noyau d'essai sur la base des premiers poids et des premières valeurs de champ local, d'un premier processus stochastique par rapport au premier groupe, le premier processus stochastique étant par rapport à la modification d'un état respectif d'une ou plusieurs des premières variables du premier groupe, le premier processus stochastique incluant la réalisation, en parallèle, de premiers essais par rapport à une ou plusieurs des premières variables dans lesquelles un premier essai respectif détermine s'il faut modifier un état respectif d'une première variable respective ;
le stockage, par le noyau d'essai sur une mémoire globale, de premiers résultats du premier processus stochastique ;
l'accès aux premiers résultats à partir de la mémoire globale par un noyau (530) de mise à jour qui inclut une pluralité de coeurs (532, 534) de calcul de mise à jour ;
la mise à jour (860), par le noyau de mise à jour sur la base des premiers résultats, de l'ensemble des matrices de champs locaux du groupe ;
l'obtention (820), par le noyau d'essai, de seconds poids (225) à partir des informations de poids stockées dans la mémoire globale, les seconds poids correspondant à un second groupe de secondes variables de la pluralité de groupes ;

l'obtention (840), par le noyau d'essai après la mise à jour des matrices de champ local de groupe par le noyau de mise à jour, de secondes valeurs de champ local qui correspondent au second groupe de secondes variables, les premières valeurs de champ local étant obtenues à partir d'une seconde matrice de champ local de groupe de la pluralité de matrices de champ local de groupe ;

la réalisation (850), par le noyau d'essai sur la base des seconds poids et des secondes valeurs de champ local, d'un second processus stochastique par rapport au second groupe,

le second processus stochastique étant par rapport à la modification d'un état respectif d'une ou plusieurs des secondes variables du second groupe, le second processus stochastique incluant la réalisation, en parallèle, de seconds essais par rapport à une ou plusieurs des secondes variables dans lesquelles un second essai respectif détermine s'il faut modifier un état respectif d'une seconde variable respective ;

le stockage, par le noyau d'essai sur une mémoire globale, de seconds résultats du second processus stochastique ;

l'accès aux seconds résultats depuis la mémoire globale par le noyau de mise à jour ; et

la mise à jour (860), par le noyau de mise à jour sur la base des seconds résultats, de l'ensemble des matrices de champs locaux de groupe ; et

la détermination (870) d'une solution au problème d'optimisation sur la base du processus d'essai semi-séquentiel.

2. Procédé selon la revendication 1, dans lequel les informations de poids incluent une matrice (640) de poids qui inclut un poids de chaque variable par rapport à chaque autre variable incluse dans le problème d'optimisation.

3. Procédé selon la revendication 2, dans lequel la matrice de poids est une matrice (600 ; 650) de demi-poids qui inclut le poids de chaque variable respective par rapport à chaque autre variable incluse dans le problème d'optimisation, mais pas un poids bidirectionnel entre chaque autre variable et chaque variable respective.

4. Procédé selon la revendication 1, dans lequel un nombre des premiers essais réalisés pour le premier processus stochastique est déterminé sur la base d'une température respective associée à chaque première variable respective, dans lequel :

la température commence à une première température ; et

la température se met à jour à une seconde température (240) après mise à jour de l'ensemble des matrices de champs locaux de groupe sur la base des résultats du premier processus stochastique, la seconde température étant inférieure à la première température.

5. Procédé selon la revendication 1, dans lequel les variables (212, 214 ; 415, 435) sont divisées en la pluralité de groupes (410, 430) sur la base d'un ou plusieurs parmi :

un nombre de cœurs de calcul d'essai du noyau (510) d'essai ;

un nombre de cœurs de calcul de mise à jour du noyau (530) de mise à jour ; ou

une capacité de traitement d'un ou plusieurs des cœurs de calcul d'essai ou d'un ou plusieurs des cœurs de calcul de mise à jour.

6. Procédé selon la revendication 1, dans lequel le problème d'optimisation est un problème d'optimisation binaire non contraint quadratique, QUBO.

7. Système, comprenant :

un noyau (510) d'essai incluant une pluralité de cœurs de calcul d'essai ; un noyau (530) de mise à jour incluant une pluralité de cœurs (532, 534) de calcul de mise à jour ;

une mémoire (220 ; 520) globale hors puce ayant stocké sur celle-ci des informations de poids relatives à des poids (225) qui correspondent à une pluralité de variables (212, 214 ; 415, 435) qui représentent chacune une caractéristique liée à un problème d'optimisation, chaque poids respectif relatif à une ou plusieurs relations entre une variable respective et une ou plusieurs autres variables liées au problème d'optimisation ; et

un support (920 ; 930) de stockage non transitoire lisible par ordinateur configuré pour stocker des instructions qui, en réponse à leur exécution par le noyau d'essai et le noyau de mise à jour, amènent le système à réaliser des opérations, les opérations comprenant :

la réalisation d'un processus d'essai semi-séquentiel par rapport à une pluralité de groupes (410, 430) de variables de la pluralité de variables dans lequel chaque groupe respectif inclut un sous-ensemble de variables de la pluralité de variables, le processus d'essai semi-séquentiel incluant :

l'obtention (820), par le noyau d'essai, de premiers poids à partir des informations de poids stockées dans la mémoire globale, les premiers poids correspondant à un premier groupe de premières variables de la pluralité de groupes ;

l'obtention (840), par le noyau d'essai, de premières valeurs de champ local qui correspondent au premier groupe de premières variables, les premières valeurs de champ local étant obtenues à partir d'une première matrice de champ local de groupe d'une pluralité de matrices (230) de champ local de groupe, chaque matrice de champ local de groupe de la pluralité de matrices de champ local correspondant à un groupe respectif de variables et incluant des valeurs de champ local qui indiquent chacune des interactions entre une variable respective et les autres variables de la pluralité de variables, telles qu'influencées par les poids respectifs des variables respectives

la réalisation (850), par le noyau d'essai sur la base des premiers poids et des premières valeurs de champ local, d'un premier processus stochastique par rapport au premier groupe, le premier processus stochastique étant par rapport à la modification d'un état respectif d'une ou plusieurs des premières variables du premier groupe, le premier processus stochastique incluant la réalisation, en parallèle, de premiers essais par rapport à une ou plusieurs des premières variables dans lesquelles un premier essai respectif détermine s'il faut modifier un état respectif d'une première variable respective ;

le stockage, par le noyau d'essai sur la mémoire globale, de premiers résultats du premier processus stochastique ;

l'accès aux premiers résultats à partir de la mémoire globale par un noyau de mise à jour qui inclut une pluralité de cœurs de calcul de mise à jour ;

la mise à jour (860), par le noyau de mise à jour sur la base des premiers résultats, de l'ensemble des matrices de champs locaux du groupe ;

l'obtention (820), par le noyau d'essai, de seconds poids à partir des informations de poids stockées sur la mémoire globale, les seconds poids correspondant à un second groupe de secondes variables de la pluralité de groupes ;

l'obtention (840), par le noyau d'essai après la mise à jour des matrices de champ local de groupe par le noyau de mise à jour, de secondes valeurs de champ local qui correspondent au second groupe de secondes variables, les secondes valeurs de champ local étant obtenues à partir d'une seconde matrice de champ local de groupe de la pluralité de matrices de champ local de groupe ;

la réalisation (850), par le noyau d'essai sur la base des seconds poids et les secondes valeurs de champ local, un second processus stochastique par rapport au second groupe, le second processus stochastique étant par rapport à la modification d'un état respectif d'une ou plusieurs des secondes variables du second groupe, le second processus stochastique incluant la réalisation, en parallèle, de seconds essais par rapport à une ou plusieurs des secondes variables dans lesquelles un second essai respectif détermine s'il faut modifier un état respectif d'une seconde variable respective ;

le stockage, par le noyau d'essai sur la mémoire globale, de seconds résultats du second processus stochastique ;

l'accès aux seconds résultats depuis la mémoire globale par le noyau de mise à jour ; et

la mise à jour (860), par le noyau de mise à jour sur la base des seconds résultats, de l'ensemble des matrices de champs locaux de groupe ; et

la détermination (870) d'une solution au problème d'optimisation sur la base du processus d'essai semi-séquentiel.

8. Système selon la revendication 7, dans lequel les informations de poids incluent une matrice (640) de poids qui inclut un poids de chaque variable par rapport à chaque autre variable incluse dans le problème d'optimisation.

9. Système selon la revendication 8, dans lequel la matrice de poids est une matrice (600 ; 650) de demi-poids qui inclut le poids de chaque variable respective par rapport à chaque autre variable incluse dans le problème d'optimisation, mais pas un poids bidirectionnel entre chaque autre variable et chaque variable respective.

10. Système selon la revendication 7, dans lequel un nombre des premiers essais réalisés pour le premier processus stochastique est déterminé sur la base d'une température respective associée à chaque première variable respective, dans lequel :

la température commence à une première température ; et

la température se met à jour à une seconde température (240) après mise à jour de l'ensemble des matrices de champs locaux de groupe sur la base des résultats du premier processus stochastique, la seconde température étant inférieure à la première température.

11. Système selon la revendication 7, dans lequel les variables (212, 214 ; 415, 435) sont divisées en la pluralité de groupes (410, 430) sur la base d'un ou plusieurs parmi :

un nombre de cœurs de calcul d'essai du noyau (510) d'essai ;
un nombre de cœurs de calcul de mise à jour du noyau (530) de mise à jour ; ou
une capacité de traitement d'un ou plusieurs des cœurs de calcul d'essai ou d'un ou plusieurs des cœurs de calcul de mise à jour.

12. Système selon la revendication 7, dans lequel le problème d'optimisation est un problème d'optimisation binaire non contraint quadratique, QUBO.

13. Support(s) (920 ; 930) de stockage non transitoire(s) lisible(s) par ordinateur configuré(s) pour stocker des instructions qui, en réponse à leur exécution par un système (900) informatique, amènent le système informatique à réaliser des opérations, les opérations comprenant :

le stockage, sur une mémoire (220 ; 520) globale du système informatique, d'informations de poids relatives à des poids (225) qui correspondent à une pluralité de variables (212, 214 ; 415, 435) qui représentent chacune une caractéristique liée à un problème d'optimisation, chaque poids respectif relatif à une ou plusieurs relations entre une variable respective et une ou plusieurs autres variables liées au problème d'optimisation ;
la réalisation d'un processus d'essai semi-séquentiel par rapport à une pluralité de groupes (410, 430) de variables de la pluralité de variables dans lequel chaque groupe respectif inclut un sous-ensemble de variables de la pluralité de variables, le processus d'essai semi-séquentiel incluant :

l'obtention (820), par un noyau (510) d'essai du système informatique qui inclut une pluralité de coeurs de calcul d'essai, de premiers poids à partir des informations de poids stockées sur la mémoire globale, les premiers poids correspondant à un premier groupe de premières variables de la pluralité de groupes ;
l'obtention (840), par le noyau d'essai, de premières valeurs de champ local qui correspondent au premier groupe de premières variables, les premières valeurs de champ local étant obtenues à partir d'une première matrice de champ local de groupe d'une pluralité de matrices (230) de champ local de groupe, chaque matrice de champ local de groupe de la pluralité de matrices de champ local correspondant à un groupe respectif de variables et incluant des valeurs de champ locales qui indiquent chacune des interactions entre une variable respective et les autres variables de la pluralité de variables, telles qu'influencées par les poids respectifs des variables respectives ;
la réalisation (850), par le noyau d'essai sur la base des premiers poids et des premières valeurs de champ local, d'un premier processus stochastique par rapport au premier groupe, le premier processus stochastique étant par rapport à la modification d'un état respectif d'une ou plusieurs des premières variables du premier groupe, le premier processus stochastique incluant la réalisation, en parallèle, de premiers essais par rapport à une ou plusieurs des premières variables dans lesquelles un premier essai respectif détermine s'il faut modifier un état respectif d'une première variable respective ;
le stockage, par le noyau d'essai sur la mémoire globale, de premiers résultats du premier processus stochastique ;
l'accès aux premiers résultats à partir de la mémoire globale par un noyau (530) de mise à jour du système informatique qui inclut une pluralité de coeurs (532, 534) de calcul de mise à jour ;
la mise à jour (860), par le noyau de mise à jour sur la base des premiers résultats, de l'ensemble des matrices de champs locaux du groupe ;
l'obtention (820), par le noyau d'essai, de seconds poids à partir des informations de poids stockées sur la mémoire globale, les seconds poids correspondant à un second groupe de secondes variables de la pluralité de groupes ;
l'obtention (840), par le noyau d'essai après la mise à jour des matrices de champ local de groupe par le noyau de mise à jour, de secondes valeurs de champ local qui correspondent au second groupe de secondes variables, les premières valeurs de champ local étant obtenues à partir d'une seconde matrice de champ local de groupe de la pluralité de matrices de champ local de groupe ;
la réalisation (850), par le noyau d'essai sur la base des seconds poids et des secondes valeurs de champ local, d'un second processus stochastique par rapport au second groupe, le second processus stochastique étant par rapport à la modification d'un état respectif d'une ou plusieurs des secondes variables du second groupe, le second processus stochastique incluant la réalisation, en parallèle, de seconds essais par rapport à une ou plusieurs des secondes variables dans lesquelles un second essai respectif détermine s'il faut modifier un état respectif d'une seconde variable respective ;

le stockage, par le noyau d'essai sur la mémoire globale, de seconds résultats du second processus stochastique ;

l'accès aux seconds résultats depuis la mémoire globale par le noyau de mise à jour ; et

la mise à jour (860), par le noyau de mise à jour sur la base des seconds résultats, de l'ensemble des matrices de champs locaux de groupe ; et

la détermination (870) d'une solution au problème d'optimisation sur la base du processus d'essai semi-séquentiel.

14. Support(s) (920 ; 930) de stockage non transitoire(s) lisible(s) par ordinateur selon la revendication 13, dans lequel les informations de poids incluent une matrice (640) de poids qui inclut un poids de chaque variable par rapport à chaque autre variable incluse dans le problème d'optimisation.

15. Support(s) (920 : 930) de stockage non transitoire(s) lisible(s) par ordinateur selon la revendication 14, dans lequel la matrice de poids est une matrice (600 ; 650) de demi-poids qui inclut le poids de chaque variable respective par rapport à chaque autre variable incluse dans le problème d'optimisation, mais pas un poids bidirectionnel entre chaque autre variable et chaque variable respective.

16. Support(s) (920 ; 930) de stockage non transitoire(s) lisible(s) par ordinateur selon la revendication 13, dans lequel un nombre des premiers essais réalisés pour le premier processus stochastique est déterminé sur la base d'une température respective associée à chaque première variable respective, dans lequel :

la température commence à une première température ; et

la température se met à jour à une seconde température (240) après mise à jour de l'ensemble des matrices de champs locaux de groupe sur la base des résultats du premier processus stochastique, la seconde température étant inférieure à la première température.

17. Support(s) de stockage non transitoire(s) lisible(s) par ordinateur selon la revendication 13, dans lequel les variables (212, 214 ; 415, 435) sont divisées en la pluralité de groupes (410, 430) sur la base d'un ou plusieurs parmi :

un nombre de coeurs de calcul d'essai du noyau (510) d'essai ;

un nombre de cœurs de calcul de mise à jour du noyau (530) de mise à jour ; ou

une capacité de traitement d'un ou plusieurs des cœurs de calcul d'essai ou d'un ou plusieurs des cœurs de calcul de mise à jour.

FIG. 1

*FIG. 2*

**FIG. 3**

FIG. 4

500

Global Memory — 520

$N_{accepted}$
**Number Of Accepted Trials** — 522

$S_{accepted}$
**State Of Neurons That Are Flipped** — 524

$Loc_{accepted}$
**Index Of Accepted Neurons** — 526

510

**CU #1**
$n_1$ $n_2$ $n_{32}$ $n_{1024}$

532 — 534

530

**CU #1**
For j = 1 : $N_{accepted}$
**Update Neurons**
$1 \rightarrow \frac{N}{M}$

**CU #M**
For j = 1 : $N_{accepted}$
**Update Neurons**
$\frac{N}{M} \times (M-1) + 1 \rightarrow N$

*FIG. 5*

FIG. 6A

**Weight Half-Matrix**

**Weight Matrix**

FIG. 6B

FIG. 7

```
                                                                    ┌─ 800
```

Obtain An Optimization Problem
Including A Plurality Of Variables    ─ 810

Obtain Weights Corresponding To The Variables    ─ 820

Divide The Variables Into Groups    ─ 830

Obtain Group Local Field Matrices
For Each Group Of Variables    ─ 840

Perform A Stochastic Trial Process
With Respect To A Group Of Variables    ─ 850

Update All Of The Group Local Field Matrices    ─ 860

Determine A Solution To The Optimization Problem    ─ 870

*FIG. 8*

System
900

Processor
910

Memory
920

Data Storage
930

Communication Unit
940

FIG. 9

**REFERENCES CITED IN THE DESCRIPTION**

**Patent documents cited in the description**

- US 20210256090 A1

- US 20200326673 A1